(19) Europäisches Patentamt
European Patent Office
Office européen des brevets

(11) EP 0 606 055 B1

(12) EUROPÄISCHE PATENTSCHRIFT

(45) Veröffentlichungstag und Bekanntmachung des Hinweises auf die Patenterteilung:
**17.09.1997 Patentblatt 1997/38**

(21) Anmeldenummer: **94100009.3**

(22) Anmeldetag: **03.01.1994**

(51) Int Cl.[6]: **C08F 222/00**, C08F 210/14, C08F 216/14, C08L 35/00, C08F 8/32, C08L 23/08, C10L 1/22, C10M 149/06, C10M 145/10, C10M 145/16

# (54) Terpolymere auf Basis von alpha,beta-ungesättigten Dicarbonsäureanhydriden, alpha,beta-ungesättigten Verbindungen und Polyoxyalkylenethern von niederen, ungesättigten Alkoholen

Terpolymers based on alpha, beta unsaturated dicarboxilic acid anhydryds, alpha, beta unsaturated compounds and polyoxyalkylene ether of lower unsaturated alcohols

Terpolymères à base d'anhydrydes d'acides dicarboxyliques alpha, bêta insaturés, de composés alpha, bêta insaturés et de polyoxyalkylène éther d'alcools inférieurs insaturés

(84) Benannte Vertragsstaaten:
**AT BE DE DK ES FR GB IT NL SE**

(30) Priorität: **06.01.1993 DE 4300128**

(43) Veröffentlichungstag der Anmeldung:
**13.07.1994 Patentblatt 1994/28**

(73) Patentinhaber: **HOECHST AKTIENGESELLSCHAFT**
**65929 Frankfurt am Main (DE)**

(72) Erfinder:
- **Krull, Matthias, Dr.**
  **D-65812 Bad Soden/Ts. (DE)**
- **Feustel, Michael, Dr.**
  **D-65779 Kelkheim (DE)**

(56) Entgegenhaltungen:
**EP-A- 0 112 195**
**EP-A- 0 154 177**
**WO-A-92/07010**
**FR-A- 2 613 371**

EP 0 606 055 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Terpolymere auf Basis von α,β-ungesättigten Dicarbonsäureanhydriden, α,β-ungesättigten Verbindungen und Polyoxyalkylenethern von niederen, ungesättigten Alkoholen

Mineralöle und Mineralöldestillate, wie Dieselkraftstoff oder Heizöl, enthalten in der Regel einen Anteil an gelösten n-Paraffinen, die bei Erniedrigung der Temperatur auskristallisieren und dadurch zur Verschlechterung der Fließeigenschaften dieser Öle bzw. Destillate führen können. Bei Mineralölen kann dies beim Transport durch Rohrleitungen zu Ablagerungen an der Wand, in besonderen Fällen (z.B. bei Stillstand einer Pipeline) sogar zu deren völligen Verstopfung führen. Auch bei der Lagerung und Weiterverarbeitung der Mineralöle können Ausfällungen von Paraffinen zu Komplikationen führen. Bei Mineralöldestillaten können als Folge der Kristallisation Verstopfungen der Filter in Dieselmotoren und Feuerungsanlagen auftreten.

Außer den klassischen Methoden der Beseitigung dieser Paraffinprobleme (thermisch, mechanisch oder mit Lösungsmitteln), die sich lediglich auf die Entfernung der bereits gebildeten Ausfällungen beziehen, wurden in den letzten Jahren eine Reihe von chemischen Additiven (Paraffininhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus; ein Teil ihrer Wirkung wird auch durch Dispergierung der Kristalle erklärt. Die modifizierten Kristalle neigen weniger zu Ablagerungen, sind auch kleiner und besitzen eine veränderte Kristallform. Mit Additiven versetzte Öle lassen sich noch bei Temperaturen pumpen bzw. verarbeiten, die oft mehr als 20°C tiefer liegen als bei nicht additivierten Ölen.

Es sind einige Copolymere auf der Basis von Maleinsäureanhydrid und α,β-ungesättigten Verbindungen als Paraffininhibitoren für Rohöle und Mineralöldestillate bekannt.

In EP-B-0 154 177 werden Umsetzungsprodukte von Copolymeren auf Basis von Maleinsäureanhydrid und α,β-ungesättigten Verbindungen mit primären Monoalkylaminen und/oder aliphatischen Alkoholen beschrieben. Diese Copolymeren sind besonders als Paraffininhibitoren für paraffinhaltige Erdölprodukte, beispielsweise Rohöle und Destillationsrückstände der Erdölverarbeitung, geeignet.

Aus EP-A-0 436 151 sind Umsetzungsprodukte von Copolymeren auf der Basis von Maleinsäureanhydrid und α, β-ungesättigten Verbindungen wie Styrol mit Dialkylaminen bekannt. Diese Copolymeren werden Erdölmitteldestillaten in Mengen von 50 bis 1000 ppm, bevorzugt 100 bis 500 ppm, zugesetzt. Derartige Erdölmitteldestillate enthalten in der Regel bereits Fließverbesserer, wie Ethylen-Vinylester-Copolymere.

EP-A-0 283 293 offenbart Copolymere abgeleitet aus der Polymerisation eines aliphatischen Olefins mit Maleinsäureanhydrid, wobei das Copolymer sowohl eine Ester- als auch eine Amidgruppe aufweisen muß, von denen jede eine Alkylgruppe mit mindestens 10 Kohlenstoffatomen enthält sowie Copolymere von der Umsetzung eines sekundären Amins mit einem Polymer, das Anhydridgruppen enthält, wobei aus den Anhydridgruppen zu gleichen Teilen Amide bzw. Aminsalze hergestellt werden.

Die noch nicht veröffentlichte deutsche Patentanmeldung P 41 23 795.1 betrifft Copolymere aus ethylenisch ungesättigten Carbonsäureestern mit Polyoxyalkylenethern von niederen, ungesättigten Alkoholen sowie deren Verwendung in paraffinhaltigen Ölen, wie Rohölen, Rückstandsölen und Öldestillaten.

Die paraffininhibierende Wirkung der bekannten Paraffininhibitoren, insbesondere bei Mitteldestillaten ist jedoch nicht ausreichend, sodaß sich bei Abkühlung teilweise große Paraffinkristalle bilden können, die aufgrund ihrer höheren Dichte sedimentieren und zu einer paraffinreichen Schicht am Boden und einer paraffinarmen oberen Schicht führen können.

Es wurde nun gefunden, daß trotz der bekannten Schwierigkeiten bei dem Einsatz von Allylverbindungen als Monomere (H.-G. Elias, Makromoleküle, 4. Auflage (1981), S. 571, 581, 585), es ebenfalls möglich ist, Terpolymere auf Basis α,β-ungesättigter Dicarbonsäureanhydriden, α,β-ungesättigten Verbindungen und Polyoxyalkylenethern von niederen, ungesättigten Alkoholen einzusetzen.

Es wurde ebenfalls gefunden, daß durch Zugabe von Alkohol/Amin-modifizierten Terpolymeren auf Basis von α,β-ungesättigten Dicarbonsäureanhydriden, α,β-ungesättigten Verbindungen und Polyoxyalkylenethern von niederen, ungesättigten Alkoholen, gegebenenfalls in Mischung mit bekannten Paraffininhibitoren, bevorzugt Mischpolymerisaten auf Basis von Ethylen und Vinylacetat, die bei Abkühlung ausfallenden Paraffinkristalle dispergiert bleiben. Infolge dieser gleichmäßigen Dispergierung wird eine homogen trübe Phase erhalten, bei der der für die "operability" entscheidende CFPP (Cold Filter Plugging Point)-Wert von oberer und unterer Phase annähernd gleich ist.

Gegenstand der Erfindung sind Terpolymere auf Basis von α,β-ungesättigten Dicarbonsäureanhydriden, α,β-ungesättigten Verbindungen und Polyoxyalkylenethern von niederen, ungesättigten Alkoholen, die dadurch gekennzeichnet sind, daß sie

20-80, bevorzugt 40-60 Mol.-% % an bivalenten Struktureinheiten A, B und/oder C

(A)

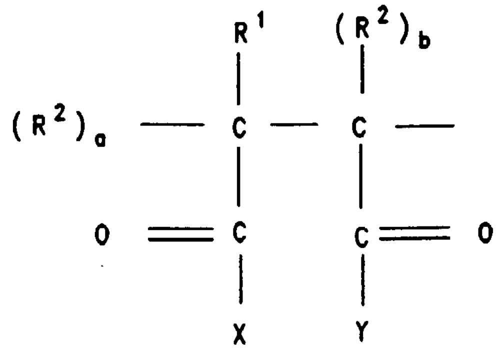

(B)

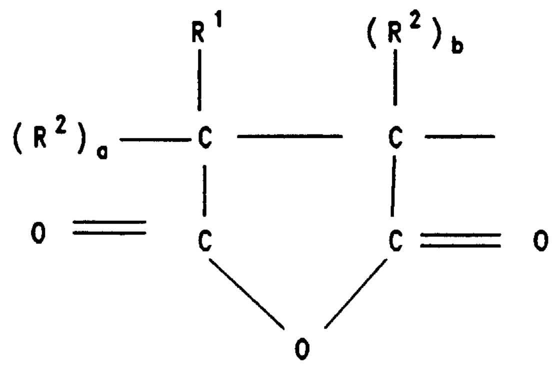

(C)

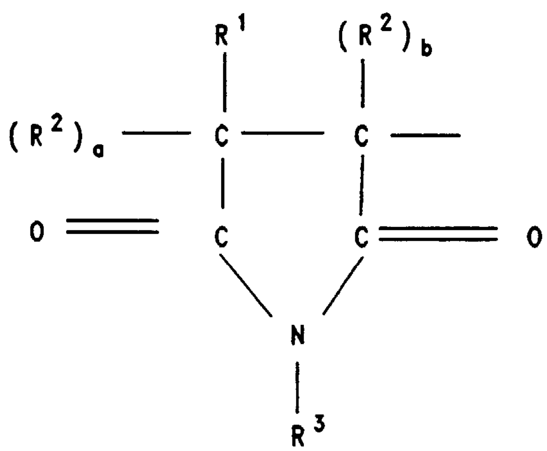

wobei

$R^1$ und $R^2$ unabhängig voneinander Wasserstoff oder Methyl,
a, b gleich Null oder Eins und a + b gleich Eins,
X und Y gleich oder verschieden sind und
für die Gruppe

$$-N-HR^3,$$

wobei $R^3$ $C_6$-$C_{40}$-Alkyl, $C_5$-$C_{20}$-Cycloalkyl oder $C_6$-$C_{18}$-Aryl,

die Gruppe

$$-N-(R^3)_2,$$

wobei $R^3$ gleich oder verschieden ist und die obengenannte Bedeutung hat, und/oder die Gruppe

$$-O-R^4,$$

wobei $R^4$ Wasserstoff, ein Kation der Formel $H_2N^{\oplus}(R^3)_2$ oder $H_3N^{\oplus}R^3$, $C_6$-$C_{40}$-Alkyl, $C_5$-$C_{20}$-Cycloalkyl oder $C_6$-$C_{18}$-Aryl, bevorzugt Phenyl, stehen, 19-80 Mol.-%, bevorzugt 39-60 Mol.-% an bivalenten Struktureinheiten D

(D)

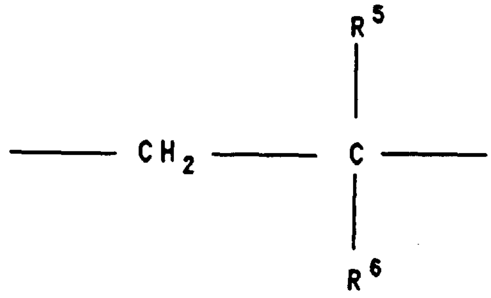

worin

$R^5$ Wasserstoff oder $C_1$-$C_4$-Alkyl und
$R^6$ $C_6$-$C_{60}$-Alkyl oder $C_6$-$C_{18}$-Aryl bedeuten

und
1-30 Mol.-%, bevorzugt 1-20 Mol.-% an bivalenten Struktureinheiten E

(E)

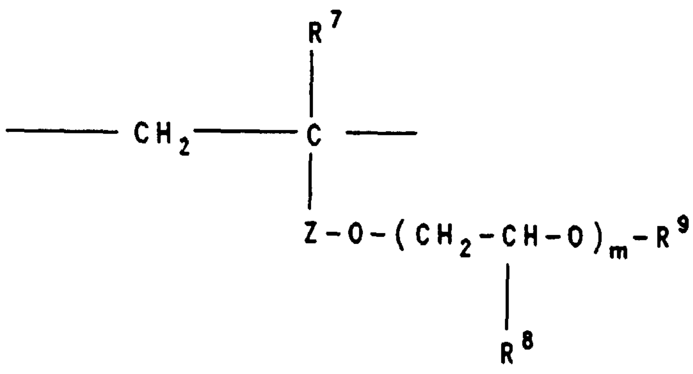

worin

$R^7$ Wasserstoff oder Methyl,

$R^8$ Wasserstoff oder $C_1$-$C_4$-Alkyl,
Z $C_1$-$C_4$-Alkylen,
m eine Zahl von 1 bis 100,
$R^9$ $C_1$-$C_{24}$-Alkyl, $C_5$-$C_{20}$-Cycloalkyl, $C_6$-$C_{18}$-Aryl oder -C(O)-$R^{10}$, wobei
$R^{10}$ $C_1$-$C_{40}$ Alkyl, $C_5$-$C_{10}$-Cycloalkyl oder $C_6$-$C_{18}$-Aryl,

enthalten.

Bevorzugt sind Terpolymere, enthaltend bivalente Struktureinheiten der Formel A, worin X eine Gruppe der Formel O-$R^4$ mit $R^4$ = $C_6$-$C_{40}$-Alkyl und Y eine Gruppe der Formel O-$R^4$ bedeutet, wobei $R^4$ ein Kation der Formel $H_2N^{\oplus}(R^3)_2$ mit $R^3$ = $C_6$-$C_{40}$-Alkyl bedeutet.

Ebenfalls sehr geeignet sind Terpolymere, enthaltend bivalente Struktureinheiten der Formel A, worin X eine Gruppe der Formel -N($R^3$)$_2$ mit $R^3$ = $C_6$-$C_{40}$-Alkyl und Y eine Gruppe der Formel O-$R^4$ bedeutet, wobei $R^4$ ein Kation der Formel $H_2N^{\oplus}(R^3)_2$ mit $R^3$ = $C_6$-$C_{40}$-Alkyl bedeutet.

Ganz besonders bevorzugt sind Terpolymere, worin $R^3$ und $R^4$ $C_6$-$C_{24}$-Alkyl bedeuten.

Die vorgenannten Alkyl-, Cycloalkyl- und Arylreste können gegebenenfalls substituiert sein. Geeignete Substituenten der Alkyl- und Arylreste sind beispielsweise ($C_1$-$C_6$)-Alkyl, Halogene, wie Fluor, Chlor, Brom und Jod, bevorzugt Chlor, und ($C_1$-$C_6$)-Alkoxy.

Alkyl ($R^3$, $R^4$) steht erfindungsgemäß im allgemeinen für einen geradkettigen oder verzweigten Kohlenwasserstoffrest mit 6-40, bevorzugt 10-24 Kohlenstoffatomen. Im einzelnen seien genannt: n-Hexyl, n-Octyl, Decyl, Dodecyl, Tetradecyl, Hexadecyl, Octadecyl, Dodecenyl, Tetrapropenyl, Tetradecenyl, Pentapropenyl, Hexadecenyl, Octadecenyl und Eicosanyl oder Mischungen, wie Cocosalkyl, Talgfettalkyl und Behenyl.

Cycloalkyl ($R^3$, $R^4$, $R^9$ und $R^{10}$) steht erfindungsgemäß im allgemeinen für einen cyclischen aliphatischen Rest mit 5-20 Kohlenstoffatomen. Bevorzugte Cycloalkylreste sind Cyclopentyl und Cyclohexyl.

Die erfindungsgemäßen Terpolymere bestehen aus den bivalenten Struktureinheiten A, B, und/oder C sowie D und E. Sie enthalten lediglich noch in an sich bekannter Weise die bei der Polymerisation durch Initiierung, Inhibierung und Kettenabbruch entstandenen Endgruppen.

Im einzelnen leiten sich die Struktureinheiten A, B und C von α,β-ungesättigten Dicarbonsäureanhydriden der allgemeinen Formel F und/oder G

(F)

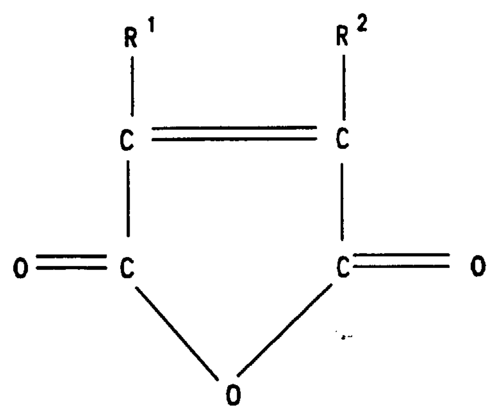

(G)

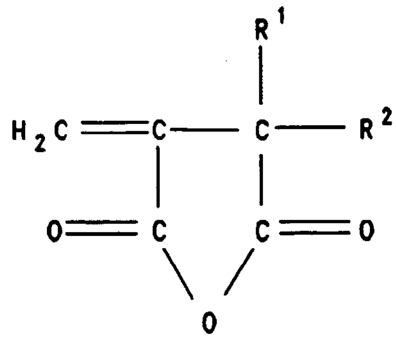

wie Maleinsäureanhydrid, Itaconsäureanhydrid, Citraconsäureanhydrid, bevorzugt Maleinsäureanhydrid, ab.

Die Struktureinheiten D leiten sich von den α,β-ungesättigten Verbindungen der allgemeinen Formel H ab.

(H)

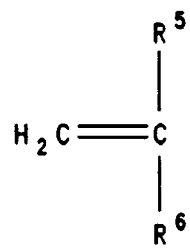

Beispielhaft seien die folgenden α,β-ungesättigten Verbindungen genannt: Styrol, α-Methylstyrol, Dimethylstyrol, α-Ethylstyrol, Diethylstyrol, i-Propylstyrol, tert.-Butylstyrol, Diisobutylen und α-Olefine, wie Decen, Dodecen, Tetradecen, Pentadecen, Hexadecen, Octadecen, $C_{20}$-α-Olefin, $C_{24}$-α-Olefin, $C_{30}$-α-Olefin, Tripropenyl, Tetrapropenyl, Pentapropenyl sowie deren Mischungen. Bevorzugt sind α-Olefine mit 10 bis 24 C-Atomen und Styrol, besonders bevorzugt sind α-Olefine mit 12 bis 20 C-Atomen.

Die Struktureinheiten E leiten sich von den Polyoxyalkylenethern niederer, ungesättigter Alkohole der allgemeinen Formel J ab.

(J)

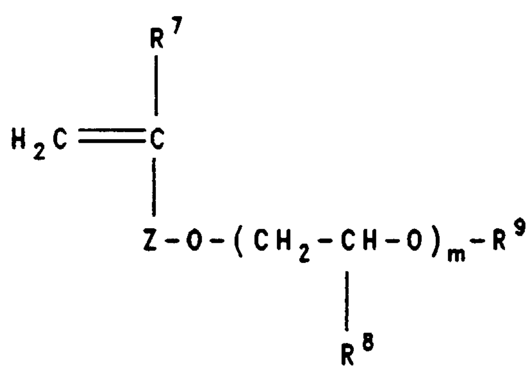

Bei den Monomeren der Formel J handelt es sich um Veretherungsprodukte ($R^9$ = -C(O)$R^{10}$) oder Veresterungsprodukte ($R^9$ = -C(O)$R^{10}$) von Polyoxyalkylenethern ($R^9$ = H).

Die Polyoxyalkylenether ($R^9$ = H) lassen sich nach bekannten Verfahren durch Anlagerung von α-Olefinoxiden, wie Ethylenoxid, Propylenoxid und/oder Butylenoxid an polymerisierbare niedere, ungesättigte Alkohole der Formel K

(K)

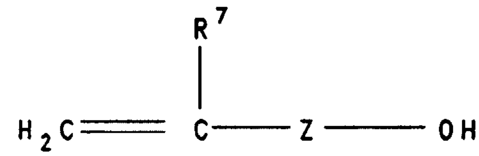

herstellen. Solche polymerisierbaren niederen ungesättigten Alkohole sind z.B. Allylalkohol, Methallylalkohol, Butenole, wie 3-Buten-1-ol und 1-Buten-3-ol, oder Methylbutenole, wie 2-Methyl-3-buten-1-ol, 2-Methyl-3-buten-2-ol und 3-Methyl-3-buten-1-ol. Bevorzugt sind Anlagerungsprodukte von Ethylenoxid und/oder Propylenoxid an Allylalkohol.

Eine nachfolgende Veretherung dieser Polyoxyalkylenether zu Verbindungen der Formel J mit $R^9 = C_1$ bis $C_{24}$-Alkyl, Cycloalkyl oder Aryl erfolgt nach an sich bekannten Verfahren. Geeignete Verfahren sind z.B. aus J. March, Advanced Organic Chemistry, 2. Auflage, S. 357f (1977) bekannt. Diese Veretherungsprodukte der Polyoxyalkylenether lassen sich auch herstellen, indem man α-Olefinoxide, bevorzugt Ethylenoxid, Propylenoxid und/oder Butylenoxid an Alkohole der Formel L

(L) $R^9$-OH

worin $R^9$ gleich $C_1$-$C_{24}$-Alkyl, $C_5$-$C_{20}$-Cycloalkyl oder $C_6$-$C_{18}$-Aryl, nach bekannten Verfahren anlagert und mit polymerisierbaren niederen,
ungesättigten Halogeniden der Formel M

(M)

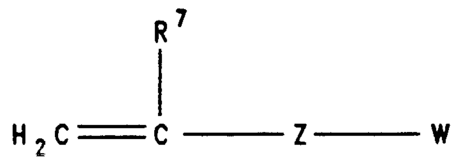

umsetzt, wobei W für ein Halogenatom steht und $R^7$ und Z die zuvor angegebene Bedeutung besitzen. Als Halogenide werden bevorzugt die Chloride und Bromide eingesetzt. Geeignete Herstellungsverfahren werden z.B. in J. March, Advanced Organic Chemistry, 2. Auflage, S. 357f (1977) genannt.

Die Veresterung der Polyoxyalkylenether ($R^9$ = -C(O)-$R^{10}$) erfolgt durch Umsetzung mit gängigen Veresterungsmitteln, wie Carbonsäurehalogeniden, Carbonsäureanhydriden oder Carbonsäureestern mit $C_1$-$C_4$-Alkoholen. Bevorzugt werden die Halogenide und Anhydride von $C_1$-$C_{40}$-Alkyl-, $C_5$-$C_{10}$-Cycloalkyl- oder $C_6$-$C_{18}$-Arylcarbonsäuren verwendet. Die Veresterung wird im allgemeinen bei Temperaturen von 0 bis 200°C, vorzugsweise 10 bis 100°C durchgeführt. Das Carbonsäurederivat wird im allgemeinen in einer, bezogen auf die Alkoholgruppe des Polyoxyalkylenethers, stöchiometrischen Menge eingesetzt. Es ist jedoch möglich, die Säurekomponente im Überschuß, z.B. in einem Überschuß von 20 bis 100 %, wie auch in Unterschuß zuzugeben. Die Veresterung wird zweckmäßig in einem Lösungsmittel durchgeführt. Geeignete Lösungsmittel sind beispielsweise aromatische Kohlenwasserstoffe, z.B. Alkylaromaten, wie Toluol, Xylol, Trimethylbenzole, Dimethylethylbenzole, Dimethylnaphthalin sowie Aromatengemische.

Bei den Monomeren der Formel J gibt der Index m den Alkoxylierungsgrad, d.h. die Anzahl der Mole an α-Olefinoxid an, die pro Mol der Formel K oder L angelagert werden.

Die Struktureinheit A enthält die Gruppen -$NHR^3$, -$N(R^3)_2$ und/oder -$OR^4$, die sich von primären Aminen der Formel (N) $NH_2R^3$, den sekundären Aminen der Formel (P) bzw. den Alkoholen der Formel (Q) HO-$R^4$ ableiten.

Als primäre Amine seien beispielsweise die folgenden genannt: n-Hexylamin, n-Octylamin, n-Tetradecylamin, n-Hexadecylamin, n-Stearylamin oder auch N,N-Dimethylaminopropylendiamin, Cyclohexylamin, Dehydroabietylamin sowie deren Mischungen.

Als sekundäre Amine seien beispielsweise genannt: Didecylamin, Ditetradecylamin, Distearylamin, Dicocosfettamin, Ditalgfettamin und deren Mischungen.

Im Rahmen der Erfindung werden kürzer und/oder längerkettige Alkohole ($C_6$-$C_{40}$) der allgemeinen Formel

(Q) $HO\text{-}R^4$

eingesetzt.

Alkohole dieser Art sind an sich bekannt. Als Beispiele seien n-Butanol, n-Hexanol, n-Octanol, n-Dodecanol und als längerkettige Alkohole Stearylalkohol, Behenylalkohol oder die unter der Bezeichnung ®Alfole (Fa. Condea) bekannten Alkohole mit einer Kohlenstoffkettenlänge bis zu 40 C-Atomen genannt.

Ein Kation ($R^4$) bedeutet erfindungsgemäß ein Ammoniumkation der Formel $H_2N^{\oplus}(R^3)_2$ oder $H_3N^{\oplus} R^3$.

Die erfindungsgemäßen Terpolymeren besitzen **vor der Umsetzung mit Aminen und/oder Alkoholen** K-Werte (gemessen nach Ubbelohde in 5 gew.-%iger Lösung in Toluol bei 25°C) von 8 bis 100, bevorzugt 8 bis 50, entsprechend mittleren Molekulargewichten ($\overline{M}_w$) zwischen ca. 500 und 100.000.

Der Anteil der einzelnen bivalenten Struktureinheiten A bis E in den erfindungsgemäßen Terpolymeren wird im wesentlichen durch die Mengenverhältnisse der eingesetzten Reaktanten bestimmt.

Ebenfalls Gegenstand der Erfindung ist ein Verfahren zur Herstellung der erfindungsgemäßen Terpolymeren auf Basis von α,β-ungesättigten Dicarbonsäureanhydriden, α,β-ungesättigten Verbindungen und Polyoxyalkylenethern von niederen, ungesättigten Alkoholen, das dadurch gekennzeichnet ist, daß man zunächst Monomere der allgemeinen Formel F und/oder G

(F)

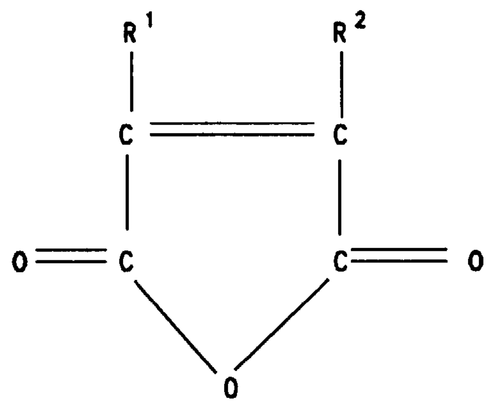

(G)

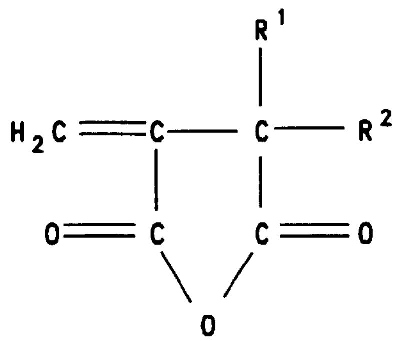

wobei $R^1$ und $R^2$, unabhängig voneinander Wasserstoff oder Methyl,

Monomere der allgemeinen Formel H

(H)

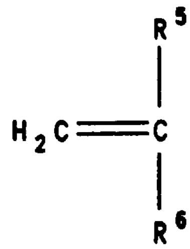

wobei $R^5$ Wasserstoff oder $C_1$-$C_4$-Alkyl und $R^6$ $C_6$-$C_{60}$-Alkyl oder $C_6$-$C_{18}$-Aryl und Monomere der allgemeinen Formel J

(J)

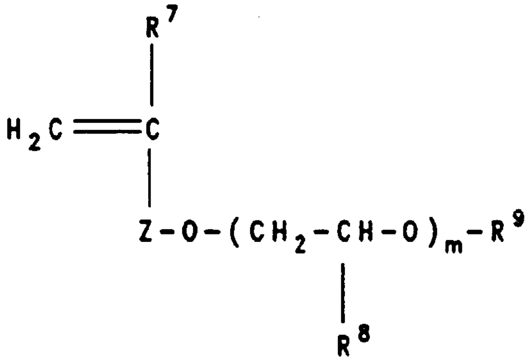

worin

- $R^7$ Wasserstoff oder Methyl,
- $R^8$ Wasserstoff oder $C_1$-$C_4$-Alkyl,
- Z $C_1$-$C_4$-Alkylen,
- m eine Zahl von 1 bis 100,
- $R^9$ $C_1$-$C_{24}$-Alkyl, $C_5$-$C_{20}$-Cycloalkyl, $C_6$-$C_{18}$-Aryl oder -C(O)-$R^{10}$, wobei
- $R^{10}$ $C_1$-$C_{40}$ Alkyl, $C_5$-$C_{10}$-Cycloalkyl oder $C_6$-$C_{18}$-Aryl,

miteinander polymerisiert und
anschließend mit primären und/oder sekundären Aminen der Formeln

(N) $-N-H_2R^3$,

(P) $-N-H(R^3)_2$,

wobei $R^3$ $C_6$-$C_{40}$-Alkyl, $C_5$-$C_{20}$-Cycloalkyl oder $C_6$-$C_{18}$-Aryl,
und/oder Alkoholen der Formel

(Q) $H-O-R^4$,

wobei $R^4$ $C_6$-$C_{40}$-Alkyl, $C_5$-$C_{20}$-Cycloalkyl oder $C_6$-$C_{18}$-Aryl, bevorzugt Phenyl, umsetzt.

Die Polymerisation erfolgt nach bekannten diskontinuierlichen oder kontinuierlichen Polymerisationsverfahren, wie Masse-, Suspensions-, Fällungs- oder Lösungspolymerisation und Initiierung mit geeigneten Radikalkettenstartern, z. B. Hydroperoxide, Peroxide oder Azoverbindungen, wie Dilauroylperoxid, Dibenzoylperoxid, t-Butylperpivalat, t-Butylpermaleinat, t-Butylperbenzoat, Dicumylperoxid, t-Butylcumylperoxid, Di-t-butyl-peroxid, Cumolhydroperoxid, t-Butylhydroperoxid, 2,2'-Azo-bis(2-methylpropanonitril) 2,2'-Azo-bis(2-methyl-butyronitril) und Mischungen untereinander. Im allgemeinen werden diese Initiatoren in Mengen von 0,1 bis 20 Gew.-%, vorzugsweise 0,2 bis 10 Gew.-%, %, berechnet auf die Monomeren, eingesetzt.

Die Molverhältnisse zwischen den α,β-ungesättigten Dicarbonsäureanhydriden, α,β-ungesättigten Verbindungen und Polyoxyalkylenethern von niederen, ungesättigten Alkoholen liegen zwischen 1 : 0,5-2 : 0,01 - 0,5, bevorzugt 1 : 0,9 - 1,1 0,04-0,2.

Die Polymerisation erfolgt in der Regel bei Temperaturen von 40-400°C, vorzugsweise 80-250°C, wobei bei Verwendung von α,β-ungesättigten Verbindungen oder Lösungsmitteln mit Siedetemperaturen unterhalb der Polymerisationstemperatur zweckmäßig unter Druck gearbeitet wird. Die Polymerisation wird zweckmäßig unter Luftausschluß, z.B. unter Stickstoff durchgeführt, da Sauerstoff die Polymerisation stört. Bei der Wahl des Initiators bzw. des Initiatorsystems ist es zweckmäßig, darauf zu achten, daß die Halbwertzeit des Initiators oder des Initiatorsystems bei der gewählten Polymerisationstemperatur weniger als 3 Stunden beträgt.

Zur Erzielung niedermolekularer Copolymere ist es oftmals zweckmäßig, in Gegenwart von an sich bekannten Reglern zu arbeiten. Geeignete Regler sind beispielsweise organische Mercapto-Verbindungen, wie 2-Mercapto-Ethanol, 2-Mercapto-Propanol, Mercapto-Essigsäure, Mercapto-Propionsäure, tert.-Butylmercaptan, n-Butylmercaptan, n-Octylmercaptan, n-Dodecylmercaptan und tert.-Dodecylmercaptan, die im allgemeinen in Mengen von 0,1 Gew.-% bis 10 Gew.-% eingesetzt werden.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rührreaktoren oder statische Mischer.

Bevorzugtes Verfahren zur Herstellung der erfindungsgemäßen Terpolymeren ist die Lösungspolymerisation. Sie wird durchgeführt in Lösungsmitteln, in denen die Monomeren und die gebildeten Terpolymeren löslich sind. Es sind hierfür alle Lösungsmittel geeignet, die diese Vorgabe erfüllen und die mit den Monomeren sowie den gebildeten Terpolymeren keine Reaktion eingehen. Beispielsweise sind dies organische, bevorzugt aromatische Lösemittel, wie Cumol, Toluol, Xylol, Ethylbenzol oder auch kommerzielle Lösemittelgemische, wie ®Solvent Naphtha, ®Shellsol AB oder ®Solvesso 150, 200, 250.

Bei der Herstellung können alle Monomere vorgelegt und durch Zugabe eines Radikalkettenstarters und Wärmezufuhr polymerisiert werden.

Zweckmäßigerweise wird jedoch das Lösungsmittel und ein Teil der Monomeren (z.B. ca. 5-20 %) vorgelegt und der Rest der Monomerenmischung mit dem Initiator und gegebenenfalls Co-Initiator und Regler zudosiert.

Bevorzugt werden auch Lösungsmittel und α,β-ungesättigte Verbindungen der Formel H, besonders $C_4$-$C_{60}$-α-Olefine, im Polymerisationsreaktor vorgelegt und nach Erreichen der Polymerisationstemperatur das säureanhydridgruppenhaltige Monomer der Formel F und/oder G sowie das Monomer der Formel J, beide gegebenenfalls gelöst im Lösungsmittel, und der Initiator sowie gegebenenfalls Co-Initiator und Regler zudosiert.

Die Konzentration der zu polymerisierenden Monomeren liegt zwischen 20 und 95 Gew.-%, bevorzugt 50 und 90 Gew.-%.

Das feste Terpolymer kann durch Ausfällung mit geeigneten Nicht-Lösemitteln, wie Aceton oder Methanol oder durch Verdampfen des Lösungsmittels isoliert werden. Es ist jedoch zweckmäßig, für die Polymerisation ein Lösungsmittel zu wählen, in dem die weitere Umsetzung mit Aminen und/oder Alkoholen erfolgen kann. In der Regel ist es von Vorteil, die Anhydride der Dicarbonsäuren und nicht die freien Säuren für die Polymerisation einzusetzen, da diese besser mit Olefinen reagieren und anschließend selektiv mit Aminen und/oder Alkoholen umgesetzt werden können. Der Einsatz der entsprechenden Dicarbonsäuren ist jedoch nicht auszuschließen.

Nach der Polymerisation erfolgt die Umsetzung mit Aminen der allgemeinen Formel N, P und/oder Alkoholen der Formel Q.

Die Umsetzung der Terpolymeren mit den primären und/oder sekundären Aminen erfolgt bei Temperaturen zwischen 30 und 250°C im Verlauf von 0,5 bis 20 Stunden. Das primäre und/oder sekundäre Amin, bevorzugt Fettamin, wird dabei in Mengen von ungefähr 1 bis 2 Mol pro Mol einpolymerisiertem Dicarbonsäureanhydrid, das sind ca. 0,9-2,5 Mol pro Mol angewandt. Die Verwendung größerer oder geringerer Mengen ist möglich, bringt aber keinen Vorteil.

Werden 2 Mol eines sekundären Amins eingesetzt, erhält man bei niedrigen Reaktionstemperaturen (30 - 120°C) Amid-Ammoniumsalze. Die Bildung einer zweiten Amidgruppierung erfordert Temperaturen oberhalb 120°C, längere Verweilzeiten und Wasserauskreisen. Werden geringere Mengen als 1 Mol angewandt, findet keine vollständige Umsetzung zum Monoamid statt. Die Wahl der Reaktionsbedingungen/Derivat hängt vom Einsatzzweck ab.

Bei der Umsetzung der Terpolymeren mit primären und/oder sekundären Aminen N, P und/oder Alkoholen der Formel Q wird zweckmäßigerweise zunächst die Umsetzung des Terpolymeren mit dem Alkohol zu dem Halb- bzw. Diester durchgeführt. Der Umsetzungsgrad der Anhydridgruppen mit den Alkoholen liegt im allgemeinen zwischen 60 und 95 Mol.-%. Die teilveresterten Terpolymeren werden danach mit den primären und/oder sekundären Aminen entweder vollständig oder teilweise zu Amiden, Ammoniumsalzen, Diamiden und/oder cyclischen Imiden umgesetzt.

Am zweckmäßigsten wird bei der Herstellung der erfindungsgemäßen Terpolymerisate so vorgegangen, daß zunächst die Umsetzung mit den Alkoholen der Formel Q in Lösung, Suspension oder Schmelze zu den Halb- bzw. Di-Estern vorgenommen wird. Zur Beschleunigung der Bisveresterung, die unter Wasserabspaltung erfolgt, können Katalysatoren, im allgemeinen Säuren, wie Schwefelsäure oder p-Toluolsulfonsäure zugesetzt werden. Zur Entfernung des Reaktionswassers arbeitet man vorzugsweise unter Verwendung eines mit Wasser nicht mischbaren Lösungsmittels, wie Toluol oder Xylol, entweder in Suspension oder Lösung, und destilliert das Reaktionswasser azeotrop ab. Ist das umzusetzende Terpolymer am Anfang der Umsetzung in dem Lösungsmittel unlöslich, so geht es mit zunehmendem Veresterungsgrad in Lösung, um nach Beendigung der Reaktion eine klare Lösung zu bilden.

Der bevorzugte Temperaturbereich für die Bildung der Halb- bzw. Di-Ester liegt im Bereich von 60-180°C, bevorzugt von 80-140°C.

Anschließend an die Halbveresterung wird bevorzugt im selben Lösungsmittel die Amidierung mit primären und/oder sekundären Aminen der Formeln N und/oder P im Temperaturbereich von 50-250°C, bevorzugt 100-200°C, durchgeführt, wobei ebenfalls das Reaktionswasser azeotrop entfernt wird.

Es ist jedoch auch möglich, die Amidierungsreaktion gleichzeitig mit oder vor der Veresterungsreaktion durchzuführen. Bei gleichzeitiger Veresterung und Amidierung bringt man das Ausgangsterpolymer mit einem Gemisch aus Alkoholen der Formel Q und/oder primären und/oder sekundären Aminen der Formeln N und/oder P zur Reaktion.

Die erfindungsgemäßen Terpolymere sind besonders als Paraffininhibitoren für paraffinhaltige Rohöle und Erdölprodukte, die paraffine Wachse, Asphaltene, Harze usw. enthalten, geeignet. Als paraffinhaltige Erdölprodukte im Sinne der Erfindung seien beispielsweise Rohöle, Destillationsrückstände der Erdölverarbeitung oder andere paraffinhaltige Öle, wie Mitteldestillate genannt (vgl. z.B. Compositions and Properties of Petroleum, F. Enke Publishers, Stuttgart, 1981, Seiten 1-37).

Paraffine können hierbei geradkettig oder verzweigte Alkane mit etwa 10-50 Kohlenstoffatomen sein.

Die Anwendungskonzentrationen der erfindungsgemäßen Paraffininhibitoren betragen im allgemeinen 10-10000 ppm, bevorzugt 20-5000 ppm, besonders bevorzugt 50-1000 ppm im Erdölprodukt.

Die für ein bestimmtes paraffinhaltiges Öl optimale Anwendungskonzentration kann jeweils, z.B. durch Stockpunktbestimmung (DIN ISO 3016) ermittelt werden.

Beispielsweise bei Rohölen kann die Zugabe der erfindungsgemäßen Paraffininhibitoren sowohl im Bohrloch als auch während des Transports, der Lagerung oder der Weiterverarbeitung erfolgen.

Es hat sich gezeigt, daß die erfindungsgemäßen Terpolymere in Mischungen mit Ethylen-Vinylester-Copolymeren ausgezeichnete Wirkung als Paraffindispergatoren in Mitteldestillaten besitzen. Darüber hinaus sind die erfindungsgemäßen Terpolymere in Mischung mit Ethylen-Vinylester-Copolymeren zur Absenkung des cloud points (CP) in Mitteldestillaten geeignet. Üblicherweise bestehen diese Mischungen aus 50 bis 1000 ppm, bevorzugt 50 bis 500 ppm der erfindungsgemäßen Terpolymere und 50 bis 1000 ppm, bevorzugt 50 bis 500 ppm an Ethylen-Vinylester-Copolymeren. Neben diesen Copolymeren kommen jedoch auch gleichermaßen Terpolymere in Betracht, die neben Ethylen und Vinylestern weitere Comonomere enthalten. Die erfindungsgemäßen Terpolymeren und Ethylen-Vinylester-Copolymeren können auch als Einzelstoffe den Mitteldestillaten, die eine dieser Komponenten bereits enthalten, zugesetzt werden.

Geeignete Vinylestermonomere sind $C_1$-$C_{20}$-Alkylvinylester, bevorzugt $C_1$-$C_{12}$-Alkylvinylester, z.B. Vinylacetat, Vinylpropionat, Neononansäurevinylester und Neodecansäurevinylester sowie Vinylester von gesättigten $C_{10}$-$C_{24}$-Fettsäuren. Weitere geeignete Comonomere sind Ester ungesättigter Carbonsäuren, bevorzugt die $C_1$-$C_{24}$-Alkylester der Acrylsäure, Methacrylsäure und Fumarsäure sowie $C_1$-$C_{10}$-Alkylvinylester, Diisobutylen, Dimethylvinylcarbinol und Methoxyessigsäurevinylester.

Derartige Ethylen-Vinylester-Copolymere bzw. Terpolymere sind in der Patentliteratur eingehend beschrieben. Beispielsweise seien die DE-B-11 47 799 (Ethylen/Vinylacetat), DE-A-32 47 753 (Ethylen/Alkencarbonsäureester, Carbonsäurevinylester/ Vinylketone), US-A- 4 015 063 (Ethylen, Dimethylvinylcarbinol, Fettsäurevinylester), EP-A-203 554 (Ethylen/Diisobutylen/Vinylacetat), EP-A-309 897 (Ethylen/Methoxyessigsäurevinylester) und DE-A-40 42 206 (Ethylen/Vinylacetat/Neononan- oder Neodecansäurevinylester) angeführt.

Bevorzugte Copolymerisate sind solche, die im wesentlichen

80 - 51 Gew.-% Ethylen und
20 - 49 Gew.% Vinylacetat oder Vinylpropionat enthalten.

Bevorzugte Terpolymerisate enthalten neben

79 - 40 Gew.-% Ethylen,
20 - 35 Gew.% , bevorzugt 1 - 15 Gew.-% Vinylacetat oder Vinylpropionat, und
1 - 25 Gew.% , bevorzugt 1 - 15 Gew.-% Diisobutylen,

Neononansäurevinylester oder Neodecansäurevinylester.

Des weiteren hat sich gezeigt, daß Mischungen aus den erfindungsgemäßen Terpolymeren, den vorstehend beschriebenen Ethylen-Vinylester-Copolymeren und bestimmten quartären Ammoniumsalzen ausgezeichnete Wirkung als Paraffindispergatoren in Mitteldestillaten besitzen.

Geeignete quartäre Ammoniumsalze besitzen die allgemeine Formel

$$^{\oplus}N(R^{11})_4X^{\ominus}$$

wobei $R^{11}$ gleich oder verschieden sein kann und für $C_1$-$C_{30}$-Alkyl, bevorzugt $C_1$-$C_{22}$-Alkyl, $C_2$-$C_{30}$-Alkenyl, bevorzugt $C_2$-$C_{22}$-Alkenyl, Benzyl oder einen Rest der Formel $-(CH_2-CH_2-O)_n-R^{12}$ steht, wobei $R^{12}$ Wasserstoff oder ein Fettsäurerest der Formel $C(O)-R^{13}$ ist, mit $R^{13}$ $C_6$-$C_{40}$-Alkyl oder $C_6$-$C_{40}$-Alkenyl, n eine Zahl von 1 bis 30 und X für Halogen, bevorzugt Chlor oder Methosulfat steht.

Beispielhaft für derartige quartäre Ammoniumsalze seien genannt: Dihexadecyl-dimethylammoniumchlorid, Distearyl-dimethylammoniumchlorid, Quaternisierungsprodukte von Estern des Di- und Triethanolamins mit langkettigen Fettsäuren (Laurinsäure, Myristinsäure, Palmitinsäure, Stearinsäure, Behensäure, Ölsäure und Fettsäuremischungen, wie Cocosfettsäure, Talgfettsäure, hydrierte Talgfettsäure, Tallölfettsäure), wie N-Methyl-triethanolammonium-distearylester-chlorid, N-Methyl-triethanolammonium-distearylester-methosulfat, N,N-Dimethyl-diethanolammonium-distearylester-chlorid, N-Methyl-triethanolammonium-dioleylester-chlorid, N-Methyl-triethanolammonium-trilaurylester-methosulfat, N-Methyl-triethanolammonium-tristearylester-methosulfat und deren Mischungen.

Üblicherweise bestehen diese Mischungen aus 50 bis 1000 ppm, bevorzugt 50 bis 500 ppm der erfindungsgemäßen Terpolymere, 50 bis 1000 ppm, bevorzugt 50 bis 500 ppm an Ethylen-Vinylester-Copolymeren und 50 bis 1000 ppm, bevorzugt 50 bis 500 ppm der quartären Ammoniumsalze.

Ein weiterer Gegenstand der Erfindung sind auch die mit den erfindungsgemäßen Paraffininhibitoren gegen Paraffinablagerungen stabilisierten Erdölprodukte. Die erfindungsgemäßen Terpolymerisate und Terpolymerisat/ Co-Additiv-Gemische verbessern das Tieftemperaturverhalten dieser Öle und bewirken hiermit ein gegenüber dem Stand der Technik verbessertes Fließverhalten. Insbesondere werden der Stockpunkt (pour point) und die Viskosität verbessert.

Die Verbesserung des Fließverhaltens kann z.B. durch die Bestimmung des Stockpunktes (nach der ASTM-Norm Nr. 97 B, Section 6 f) durch Messungen der ausgeschiedenen Paraffinmengen sowie durch Viskositätsmessungen bestimmt werden. Insbesondere die erstgenannte Methode stellt einen in der Praxis stark verbreitetes Verfahren dar, das bei Screening-Untersuchungen meist den praktischen Anwendungsbedingungen angepaßt wird (z.B. Zugabe des Additivs bei 50°C (actual pour point)).

Die Paraffindispergierung in Mitteldestillaten kann nachgewiesen werden durch Lagerung der additivierten Ölproben im Kälteschrank bei Temperaturen zwischen -13 und -20°C (Durchführung nach M. Feustel et al., Science & Technology, Bd. 43, S. 396, Fig. 2 (1990)) mit anschließender optischer Beurteilung des Sedimentationsverhaltens sowie Auftrennung des Ölmusters in eine obere und eine untere Phase des CFPP-Wertes (EN 116).

## Beispiele

### Allgemeine Herstellvorschrift

Die Polymerisation erfolgt in einem 2 l-Fünfhalskolben (gegebenenfalls mit zusätzlichen Claisen-Aufsätzen) mit Ankerrührer, Rückflußkühler, Innenthermometer, Gaseinleitungsrohr und bis zu 3 (beheizbaren) Tropftrichtern. Die zur Polymerisation vorgelegten Lösungen werden vor und während der Polymerisation mit Stickstoff gespült. Die Eigenviskositätswerte K werden nach Ubbelohde in Toluol bei einer Polymerkonzentration von 5 Gew.-% bestimmt. IR-Spektren werden anhand 1 gew.-%iger Lösungen in Chloroform erstellt.

Bei den eingesetzten Allylmethylpolyglykolen handelt es sich um Handelsprodukte der Fa. Hoechst AG mit folgenden Charakteristika:

®Polyglykol AM 250: durchschnittliches Molekulargewicht = 250 g/mol
®Polyglykol AM 350: durchschnittliches Molekulargewicht = 350 g/mol
®Shellsol AB und Solvent Naphtha sind kommerzielle, oberhalb 180°C siedende aromatische Lösemittelgemische der Firmen Shell bzw. Veba Oel.

### Beispiel 1: Terpolymer aus $C_{18}$-$\alpha$-Olefin, Maleinsäureanhydrid und ®Polyglykol AM 350 in Toluol

Eine Lösung von 277,2 g (1,1 mol) Octadecen-1 in 50 g Toluol wird unter Durchleiten eines Stickstoffstroms auf

100°C erwärmt. Bei dieser Temperatur werden unter starkem Rühren im Laufe von 3 Stunden aus separaten Tropftrichtern 88,2 g (0,9 mol) geschmolzenes Maleinsäureanhydrid, 35 g (0,1 mol) ®Polyglykol AM 350 sowie eine Initiatorlösung bestehend aus 3,5 g tert.-Butyl-peroxybenzoat und 3,5 g tert.-Butyl-peroxy-2-ethylhexanoat in 55,8 g Toluol zudosiert. Es wird noch 2 Stunden bei 100°C nachgerührt.
Die resultierende, rotbraun gefärbte Polymerlösung hat einen Feststoffgehalt von 48,2 % und enthält kein unumgesetztes Maleinsäureanhydrid. Das Polymer hat einen K-Wert von 16. IR-Banden bei 1775 und 1855 $cm^{-1}$ zeigen die Anwesenheit von Anhydriden.

Beispiel 2: Terpolymer aus $C_{18}$-α-Olefin, Maleinsäureanhydrid und ®Polyglykol AM 350 in Shellsol AB

Eine Lösung von 252 g (1,0 mol) $C_{18}$-α-Olefin in 115 g Shellsol AB wird unter Durchleiten eines Stickstoffstroms auf 160°C erwärmt. Binnen 2 Stunden werden aus separaten Tropftrichtern kontinuierlich 98 g (1,0 mol) geschmolzenes Maleinsäureanhydrid, eine Lösung von 3,5 g Di-tert.-butylperoxid und 3,5 g tert.-Butyl-peroxybenzoat in 85 g Shellsol AB sowie 70 g (0.2 mol) ®Polyglykol AM 350 in 73,7 g Shellsol AB eingetropft. Es wird noch 2 Stunden bei 180°C nachgerührt.
Die resultierende, orangefarbene Polymerlösung hat einen Trockenrückstand von 46,2 %; das resultierende Polymer hat einen K-Wert von 17.

Beispiel 3: Terpolymer aus $C_{18}$-α-Olefin, Maleinsäureanhydrid und ®Polyglykol AM 350 in Shellsol AB

Eine Lösung von 302,4 g (1,2 mol) $C_{18}$-α-Olefin in 115 g Shellsol AB wird unter Durchleiten eines Stickstoffstroms auf 180°C erwärmt. Binnen 2 Stunden werden kontinuierlich 88,2 g (0,9 mol) geschmolzenes Maleinsäureanhydrid, eine Lösung von 7 g Di-tert.-butylperoxid in 85 g Shellsol AB sowie 17,5 g (0,05 mol) ®Polyglykol AM 350 in 76,68 g Shellsol AB eingetropft. Es wird noch 1 Stunde bei 180°C nachgerührt.
Die resultierende Polymerlösung hat einen Trockenrückstand von 45,9 %; das resultierende Polymer hat einen K-Wert von 17.

Beispiel 4: Terpolymer aus $C_{18}$-α-Olefin, Maleinsäureanhydrid und ®Polyglykol AM 250 in Shellsol AB

Analog Beispiel 3 werden 302,4 g Octadecen-1, 88,2 g Maleinsäureanhydrid und 12,5 g ®Polyglykol AM 250 bei 180°C polymerisiert. Das resultierende Polymer hat einen K-Wert von 15.

Beispiel 5: Terpolymer aus $C_{14\text{-}16}$-α-Olefin, Maleinsäureanhydrid und ®Polyglykol AM 350 in Shellsol AB

Analog Beispiel 3 werden 252 g einer Mischung aus Tetradecen und Hexadecen (1:1), 88,2 g Maleinsäureanhydrid und 17,5 g ®Polyglykol AM 350 bei 180°C polymerisiert. Das resultierende Polymer hat einen K-Wert von 15.

Beispiel 6: Terpolymer aus $C_{20\text{-}24}$-α-Olefin, Maleinsäureanhydrid und ®Polyglykol AM 350 in Shellsol AB

Analog Beispiel 3 werden 396,6 g (1,2 mol) eines $C_{20\text{-}24}$-α-Olefins, 88,2 g Maleinsäureanhydrid und 17,5 g ®Polyglykol AM 350 bei 180°C polymerisiert. Das resultierende Polymer hat einen K-Wert von 18.

Beispiel 7: Terpolymer aus Styrol, Maleinsäureanhydrid und ®Polyglykol AM 350

Zu einer Lösung von 98 g (1,0 mol) Maleinsäureanhydrid in 300 g Shellsol AB werden unter Rühren und Durchleiten eines Stickstoffstroms im Laufe von 4 Stunden bei 160°C parallel 99 g (0,95 mol) Styrol, eine Lösung von 4,0 g Di-tert.-Butylperoxid in 50 g Shellsol AB sowie eine Lösung von 17,5 g (0,05 mol) ®Polyglykol AM 350 in 50 ml Shellsol AB zugetropft. Es resultiert eine hellbraune, 35 gew.-%ige Polymerlösung.

Beispiel 8: Terpolymer aus $C_{18}$-α-Olefin, Maleinsäureanhydrid und Allylpolyglykolstearylester

Analog Beispiel 3 werden 277,2 g (1,2 mol) $C_{18}$-α-Olefin, 88,2 g (0,9 mol) Maleinsäureanhydrid und 17,5 g Allylpolyglykol-stearylester (dargestellt durch Veresterung von Stearinsäure mit einem Ethoxylat des Allylalkohols mit 6 mol Ethylenoxid) bei 180°C polymerisiert. Das resultierende Polymer hat einen K-Wert von 18.

Beispiel 9: Terpolymer aus $C_{14/16}$-α-Olefin, Maleinsäureanhydrid und Allylbutylpolyglykol

Analog Beispiel 3 werden 334 g einer Mischung aus Tetradecen und Hexadecen (1:1), 118 g Maleinsäureanhydrid

und 107 g Allylbutylpolyglykol (enthaltend 24 mol Ethylenoxid und 8 mol Propylenoxid) in 376 g Solvent Naphtha bei 180°C polymerisiert. Das resultierende Polymer hat einen K-Wert von 16.

Beispiel 10: Terpolymer aus $C_{14/16}$-$\alpha$-Olefin, Maleinsäureanhydrid und Allylbutylpolyglykol

Analog Beispiel 3 werden 334 g eine Mischung aus Tetradecen und Hexadecen (1:1), 118 g Maleinsäureanhydrid und 107 g Allylbutylpolyglykol (enthaltend 15 mol Ethylenoxid und 15 mol Propylenoxid) in 376 g Solvent Naphtha bei 180°C polymerisiert. Das resultierende Polymer hat einen K-Wert von 17.

Beispiel 11: Umsetzung des Terpolymers nach Beispiel 1 mit Ditalgfettamin zum Amid-Ammoniumsalz

132,6 g der Polymerlösung nach Beispiel 3 werden bei 80°C mit 100 ml Toluol und 190 g Ditalgfettamin versetzt und 2 Stunden bei dieser Temperatur gerührt. Der titrierbare Stickstoff der 66,5 gew-%igen Polymerlösung beträgt 0,73 %.
Im IR-Spektrum sind keine Banden des Anhydrids zu erkennen; Banden bei 1565 und 1620 $cm^{-1}$ zeigen die Bildung eines Amid-Ammoniumsalzes.

Beispiel 12: Umsetzung des Terpolymers nach Beispiel 5 mit Ditalgfettamin

50 g der Polymerlösung nach Beispiel 5, enthaltend 0,086 mol Anhydridgruppen, werden bei 75°C mit 84 g Shellsol AB und 86 g Ditalgfettamin versetzt und 3 Stunden bei dieser Temperatur gerührt. Der titrierbare Basenstickstoff der 50 %igen Polymerlösung beträgt 0,8 %.

Beispiel 13: Umsetzung des Terpolymers nach Beispiel 5 mit Distearylamin

Entsprechend Beispiel 12 wurden 50 g der Polymerlösung nach Beispiel 5 mit Distearylamin umgesetzt.

Beispiel 14: Umsetzung des Terpolymers nach Beispiel 3 mit Distearylamin

100 g der Polymerlösung nach Beispiel 3, enthaltend 0,13 mol Anhydridgruppen, werden bei 80°C mit einer Lösung aus 130 g (0,26 mol) Distearylamin in 100 g Xylol versetzt und 3 Stunden bei 150°C gerührt. Der titrierbare Basenstickstoff der 50 gew.-%igen Polymerlösung beträgt 0,51 %.

Beispiel 15: Umsetzung des Terpolymers nach Beispiel 3 mit Dicocosfettamin

100 g der Polymerlösung nach Beispiel 3, enthaltend 0,13 mol Anhydridgruppen, werden bei 80°C mit einer Lösung aus 100 g (0,26 mol) Dicocosfettamin in 100 g Xylol versetzt und 3,5 Stunden bei 160°C gerührt. Der titrierbare Basenstickstoff der 50 gew.-%igen Polymerlösung beträgt 0,62 %.

Beispiel 16: Umsetzung des Terpolymers nach Beispiel 3 mit Stearylamin und Ditalgfettamin

100 g einer Polymerlösung nach Beispiel 3, enthaltend 0,13 mol Anhydridgruppen, werden bei 80°C mit 33,9 g (0,13 mol) Stearylamin versetzt und 2 Stunden bei dieser Temperatur gerührt. Anschließend werden 65 g (0,13 mol) Ditalgfettamin in 93 g Xylol zugegeben und 3 Stunden bei 150°C am Wasserabscheider gekocht. Der titrierbare Basenstickstoff der 50 gew.-%igen Polymerlösung beträgt 0,15 %.

Beispiel 17: Umsetzung des Terpolymers nach Beispiel 7 mit Ditalgfettamin

50 g der Polymerlösung nach Beispiel 7, enthaltend 0,063 mol Anhydrid, wird bei einer Temperatur von 75°C unter Rühren eine Lösung von 63,2 g (0,126 mol) Ditalgfettamin in 58,6 g Shellsol AB gegeben. Es wird 2 Stunden bei dieser Temperatur nachgerührt. Die resultierende 50 gew.-%ige Polymerlösung enthält 0,78 % titrierbaren Basenstickstoff.

Beispiel 18: Umsetzung des Terpolymers nach Beispiel 1 mit Behenylalkohol

181,0 g der Polymerlösung (entsprechend 0,3 mol Maleinsäureanhydrid) nach Beispiel 1 und 94,1 g (0,3 mol) Behenylalkohol werden 3 Stunden bei 150°C am Rückfluß gekocht. Die Säurezahl beträgt 58.

Beispiel 19: Neutralisation des teilveresterten Terpolymers nach Beispiel 18 mit Distearylamin

Die nach Beispiel 18 erhaltene teilveresterte Terpolymerlösung wird bei 70°C durch Zugabe von 143,6 g (0,3 mol) geschmolzenem Distearylamin neutralisiert und 1 Stunde bei 70°C gerührt. Die resultierende, hochviskose, hellgelb gefärbte Polymerlösung hat einen Feststoffgehalt von 78 % und titrierbaren Basenstickstoff von 0,91 %.

Beispiel 20: Amidierung des teilveresterten Terpolymers nach Beispiel 18 mit Distearylamin

Die gemäß Beispiel 18 erhaltene teilveresterte Terpolymerlösung wird mit 143,6 g (0,3 mol) Distearylamin und 226 g Toluol versetzt und 3 Stunden bei 130 - 140°C am Wasserabscheider gekocht. Die resultierende 51 %ige Polymerlösung enthält 0,02 % titrierbaren Basenstickstoff. IR-Banden bei 1735 und 1620 $cm^{-1}$ zeigen die Anwesenheit von Ester- und Amidgruppierungen.

Beispiel 21: Umsetzung des Terpolymers nach Beispiel 1 mit Benzylalkohol und anschließende Neutralisation mit Distearylamin

216,6 g der Polymerlösung nach Beispiel 1 und 34,2 g (0,32 mol) Benzylalkohol werden 3 Stunden bei 140°C unter Rückfluß gekocht. Die Säurezahl der teilveresterten Polymerlösung beträgt 80.
Nach Abkühlen auf 45°C werden 155,9 g geschmolzenes Distearylamin dazugegeben, wobei ein Temperaturanstieg um 3°C auftritt. Es wird 1 Stunde bei 45°C gerührt und anschließend abgefüllt. Das 80 gew.-%ige, hochviskose Produkt hat einen titrierbaren Basenstickstoff von 0,98 %.

Beispiel 22: Umsetzung des Terpolymers nach Beispiel 1 mit Distearylamin

Zu 620 g der Polymerlösung nach Beispiel 1 werden bei 160°C im Laufe von 4 Stunden 467 g (1 mol) Distearylamin gegeben und 1 Stunde bei dieser Temperatur gehalten. Der titrierbare Basenstickstoff der 49 gew.-%igen Polymerlösung beträgt 0,27 %. IR-Banden bei 1620 und 1720 $cm^{-1}$ deuten auf die Anwesenheit von Amid- und Carbonsäureeinheiten.

Beispiel 23: Umsetzung des Terpolymers nach Beispiel 9 mit Dicocosfettamin und Distearylamin

62 g der Polymerlösung nach Beispiel 9 (entsprechend 0,08 mol Anhydridgruppen) werden bei 90°C mit einer Mischung aus 32 g (0,078 mol) Dicocosfettamin und 39 g (0,078 mol) Distearylamin in 72 g Solvent Naphtha versetzt und 3 Stunden bei dieser Temperatur gerührt. Der titrierbare Basenstickstoff der 49 %igen Polymerlösung beträgt 0,64 %.

Beispiel 24: Umsetzung des Terpolymers nach Beispiel 10 mit Dicocosfettamin und Distearylamin

62 g der Polymerlösung nach Beispiel 10 (entsprechend 0,08 mol Anhydridgruppen) werden bei 90°C mit einer Mischung aus 32 g (0,078 mol) Dicocosfettamin und 39 g (0,078 mol) Distearylamin in 72 g Solvent Naphtha versetzt und 3 Stunden bei dieser Temperatur gerührt. Der titrierbare Basenstickstoff der 50 %igen Polymerlösung beträgt 0,65 %.

Beispiel 25: Herstellung eines Copolymeren aus Maleinsäureanhydrid und $C_{18}$-α-Olefin und nachfolgender Umsetzung mit Ditalgfettamin (Vergleich)

Analog Beispiel 1 wird eine Lösung von 277 g (1,1 mol) $C_{18}$-α-Olefin in 150 g Toluol unter Durchleiten von Stickstoff auf 100°C erwärmt. Unter starkem Rühren werden im Laufe von 3 Stunden 98 g (1 mol) geschmolzenes Maleinsäureanhydrid sowie eine Lösung von 3,5 g tert.-Butyl-peroxybenzoat und 3,5 g tert.-Butylperoxy-2-ethylhexanoat in 55,8 g Toluol zudosiert. Es wird 3 Stunden nachgerührt. Das resultierende Copolymer hat einen K-Wert von 16. Entsprechend Beispiel 9 werden 85,8 g obiger Polymerlösung (enthaltend 0,15 mol Anhydridgruppen) mit 142 g (0,3 mol) Ditalgfettamin in das Amid-Ammoniumsalz überführt.

Anwendungstechnische Ausprüfung

1. Stockpunktserniedriger für Rohöle

Die Wirksamkeit der erfindungsgemäßen Terpolymere als Fließverbesserer für Mineralöle wird durch die Bestimmung der Stockpunkte (pour points) gemäß der Methode DIN ISO 3016 beschrieben. Bei dieser Methode werden die nichtadditivierten bzw. die mit den Terpolymeren additivierten Rohölproben unter definierten Bedingungen nach vorangehender Aufwärmung und anschließender definierter Abkühlung auf die Fließfähigkeit geprüft. Mit den erfindungsgemäßen Terpolymerisaten wurden die Stockpunktuntersuchungen an zwei kolumbianischen Rohölen vorgenommen, die in unbehandeltem Zustand Stockpunkte von 13,5°C (Rohöl A) bzw. 6°C (Rohöl B) aufweisen.

| Produkt | Stockpunkt | | |
|---|---|---|---|
| | Einsatzmenge | Rohöl A | Rohöl B |
| Terpolymer nach Beispiel 11 | 300 ppm | 10,3°C | -1,9°C |
| | 500 ppm | 8,4°C | -2,1°C |
| | 1000 ppm | 5,3°C | -3,5°C |
| Terpolymer nach Beispiel 18 | 300 ppm | 9,5°C | -1,3°C |
| | 500 ppm | 7,9°C | -4,1°C |
| | 1000 ppm | 3,5°C | -15,2°C |

2. Paraffindispergatoren für Mitteldestillate

Für die folgenden Versuche werden acht typische, repräsentative Winterdieselkraftstoffe aus deutschen Raffinerien verwendet. Diese werden nachfolgend als Mitteldestillat I bis VIII bezeichnet.

| | Mitteldestillat I | Mitteldestillat II | Mitteldestillat III | Mitteldestillat IV | Mitteldestillat V | Mitteldestillat VI | Mitteldestillat VII | Mitteldestillat VIII |
|---|---|---|---|---|---|---|---|---|
| Trübungspunkt(°C) (Cloudpoint CP) | -5 | -6 | -8 | -8 | -8 | -6 | -1 | +3 |
| CFPP (°C) | -8 | -10 | -13 | -10 | -8 | -11 | -4 | +/-0 |
| Dichte/20°C (g/ml) | 0,822 | 0,817 | 0,812 | 0,837 | 0,822 | 0,819 | 0,830 | 0,827 |
| Siedeanfang (°C) | 163 | 173 | 167 | 183 | 173 | 169 | 171 | 169 |
| 20 % Siedepunkt (°C) | 207 | 219 | 217 | 225 | 221 | 219 | 252 | 241 |
| 90 % Siedepunkt (°C) | 341 | 362 | 324 | 338 | 333 | 330 | 353 | 361 |
| Siedeende (°C) | 373 | 382 | 359 | 361 | 358 | 362 | 368 | 384 |

Bei den Fließverbesserern (FI) handelt es sich um:

FI (A) Ethylen/Vinylacetat-Copolymer (mit ca. 27 % Vinylacetat) Schmelzviskosität (140°C) von 200 mPa·s

FI (B) Ethylen/Vinylacetat-Copolymer (mit ca. 30 % Vinylacetat) mittleres Molekulargewicht von ca. 1500.

Beschreibung der Testmethode

Die Mitteldestillate werden zunächst separat, mit Fließverbesserer und in Kombination mit Paraffindispergator auf die durch Kälte induzierten Trübungs- und Paraffininsedimentationserscheinungen getestet. Nach Einlagerung der Proben in einem Kälteschrank und Durchlaufen eines speziellen Abkühlungsprogramms (siehe M. Feustel et al., Science & Technology, Bd. 43, S. 396, Fig.2 (1990)) werden nach 72 Stunden die Proben bei -13°C auf Dispergierung beurteilt. Hierfür werden 20 ml bzw. 100 ml Mitteldestillatvolumina verwendet. Von den 100 ml Proben werden zusätzlich, nach der optischen Beurteilung, die obere Phase (50 Vol.-%) in der Kälte abgezogen. Von oberer sowie unterer Phase werden anschließend der cloud point (CP) und der cold filter plugging point (CFPP) bestimmt.
Die Bestimmung des cloud points (CP) erfolgt in Anlehnung an DIN 51597 durch Abkühlen der Ölprobe und optischer Messung des Trübungspunktes. Die Temperatur bei der eine erste Paraffin-Ausfällung zu einer Trübung führt ist der cloud point (CP). Die Messung des cloud points (CP) erfolgt in einem Gerät Herzog CP SC 815. Der cold filter plugging point (CFPP) wird gemäß Europa-Norm EN 116 bestimmt.
Es zeigt sich, daß durch Zusatz der erfindungsgemäßen Additive eine Paraffindispergierung erzielt wird.
Darüber hinaus wird eine Absenkung des cloud points (CP) erreicht (Tabelle IV).

Abkürzungen in den folgenden Tabellen:

FI = Mitteldestillatfließverbesserer
PD = Paraffindispergator
PD(1) = nach Beispiel 11
PD(2) = nach Beispiel 12
PD(3) = nach Beispiel 13
PD(4) = nach Beispiel 14
PD(5) = nach Beispiel 25 (Vergleichsbeispiel)
PD(6) = nach Beispiel 19
QAS = Quartäres Ammoniumsalz, hier N-Methyltriethanolammoniumdistearylester-methosulfat

Beurteilungsbezeichnungen:

K = klar
T = trüb
LT = leicht trüb
S = Sediment
D = dispergiert, kaum Sediment

Tabelle I

| Mitteldestillat I | | | CP-5°C/CFPP-8°C | | | | |
|---|---|---|---|---|---|---|---|
| FI | Konz. (ppm) | PD | Konz. (ppm) | QAS (ppm) | Öl-Phase | Sedimenthöhe (cm) | Volumenanteil (%) |
| FI(A) | 100 | - | - | - | K | 1,6 | 15 |
| FI(A) | 400 | - | - | - | K | 1,9 | 17 |
| FI(B) | 100 | - | - | - | K | 1,4 | 13 |
| FI(B) | 400 | - | - | - | K | 1,7 | 15 |
| FI(A) | 400 | PD(1) | 200 | - | T | 0,8 | 7 |
| FI(A) | 400 | PD(1) | 400 | - | T | 0,5 | 5 |
| FI(A) | 400 | PD(1) | 300 | 200 | T | 0,0 | 0 |
| FI(B) | 400 | PD(1) | 300 | 150 | T | 0,1 | 1 |
| Mitteldestillat II | | | | CP-6°C/CFPP-10°C | | | |
| FI | Konz. (ppm) | PD | Konz. (ppm) | QAS (ppm) | Öl-Phase | Sedimenthöhe (cm) | Volumenanteil (%) |
| FI(A) | 100 | - | - | - | K | 1,4 | 13 |
| FI(B) | 100 | - | - | - | K | 1,0 | 9 |
| FI(A) | 200 | - | - | - | K | 1,4 | 13 |
| FI(A) | 200 | PD(2) | 200 | - | LT | 0,5 | 5 |
| FI(A) | 200 | PD(2) | 350 | - | T | 0,3 | 2 |
| FI(A) | 200 | PD(2) | 500 | - | T | 0,1 | 1 |
| FI(A) | 200 | PD(4) | 200 | - | T | 0,7 | 6 |
| FI(A) | 200 | PD(4) | 500 | - | T | 0,2 | 2 |

| Mitteldestillat III | | | | CP-8°C/CFPP-13°C | | | |
|---|---|---|---|---|---|---|---|
| FI | Konz. (ppm) | PD | Konz. (ppm) | QAS (ppm) | Öl-Phase | Sediment-höhe (cm) | Volumen-anteil (%) |
| FI(B) | 100 | - | - | - | K | 1,7 | 15 |
| FI(B) | 200 | - | - | - | K | 1,8 | 16 |
| FI(B) | 200 | PD(3) | 100 | - | K | 1,0 | 9 |
| FI(B) | 200 | PD(3) | 200 | - | LT | 0,5 | 5 |
| FI(B) | 200 | PD(3) | 300 | - | T | 0,2 | 2 |
| FI(B) | 200 | PD(3) | 500 | - | T | 0,2 | 2 |
| FI(B) | 200 | PD(3) | 200 | 100 | T | 0,1 | 1 |
| FI(B) | 200 | PD(3) | 500 | 200 | T | 0,1 | 1 |

Tabelle II

Mitteldestillat I CP-5°C/CFPP-8°C

| FI | Konz. (ppm) | PD | Konz. (ppm) | QAS (ppm) | Paraffin-sediment (Vol.-%) | Paraffin in Öl-Phase | Disper-gierung | untere Phase | | obere Phase | |
|---|---|---|---|---|---|---|---|---|---|---|---|
| | | | | | | | | CP °C | CFPP °C | CP °C | CFPP °C |
| FI(A) | 200 | - | - | - | 14 | K | S | -1 | -16 | -10 | -32 |
| FI(A) | 400 | - | - | - | 19 | K | S | -1 | -13 | -11 | -33 |
| FI(A) | 400 | PD(1) | 400 | - | 4 | T | D | -1 | -20 | -13 | -38 |
| FI(A) | 400 | PD(1) | 50 | 200 | 7 | T | S | -2 | -29 | -13 | -36 |
| FI(A) | 400 | PD(1) | 100 | 200 | 5 | T | D | -2 | -29 | -12 | -37 |
| FI(A) | 400 | PD(1) | 200 | 200 | 2 | T | D | -3 | -28 | -11 | -37 |
| FI(A) | 400 | PD(1) | 300 | 200 | 1 | T | D | -4 | -32 | -11 | -37 |
| FI(A) | 400 | PD(5) | 400 | - | 7 | LT | S | -1 | -17 | -12 | -34 |

Tabelle III

Mitteldestillat II CP-6°C/CFPP-10°C

| FI | Konz. (ppm) | PD | Konz. (ppm) | QAS (ppm) | Paraffin-sediment (Vol.-%) | Paraffin in Öl-Phase | Disper-gierung | untere Phase | | obere Phase | |
|---|---|---|---|---|---|---|---|---|---|---|---|
| | | | | | | | | CP °C | CFPP °C | CP °C | CFPP °C |
| FI(B) | 200 | - | - | - | 21 | K | S | 0 | -11 | -15 | -30 |
| FI(B) | 200 | PD(2) | 250 | - | 10 | K | S | -2 | -19 | -14 | -24 |
| FI(B) | 200 | PD(2) | 200 | 150 | 8 | LT | S | -2 | -21 | -14 | -31 |
| FI(B) | 200 | PD(2+3) | 200 | 50 | 7 | LT | D | -3 | -28 | -14 | -31 |
| FI(A) | 200 | - | - | - | 19 | K | S | -1 | -10 | -14 | -28 |
| FI(A) | 200 | PD(2) | 250 | - | 8 | LT | S | -2 | -23 | -12 | -29 |
| FI(A) | 200 | PD(2) | 200 | 150 | 5 | T | D | -3 | -26 | -12 | -30 |

Tabelle IV

| Mitteldestillat | CP-Wert (°C) | | | | Differenz (K) | |
|---|---|---|---|---|---|---|
| | ohne Additiv | + 150 ppm FI(A) | 400 ppm PD(6) | 800 ppm PD(6) | $\Delta T_1$ | $\Delta T_2$ |
| Mitteldestillat IV | -8,1 | -8,1 | -10,1 | -10,9 | 2,0 | 2,8 |
| " V | -8,4 | -8,4 | -10,7 | -10,7 | 2,1 | 2,3 |
| " VI | -5,7 | -5,7 | -7,4 | -7,7 | 1,7 | 2,0 |
| " VII | 0,9 | -0,9 | -2,1 | -2,4 | 1,2 | 1,5 |
| " VIII | +3,0 | +3,0 | +2,1 | +1,2 | 0,9 | 1,8 |

## Patentansprüche

1. Terpolymere auf Basis von α,β-ungesättigten Dicarbonsäureanhydriden, α,β-ungesättigten Verbindungen und Polyoxyalkylenethern von niederen, ungesättigten Alkoholen, dadurch gekennzeichnet, daß sie 20 - 80, bevorzugt 40 - 60 Mol.-% an bivalenten Struktureinheiten A, B und/oder C

(A)

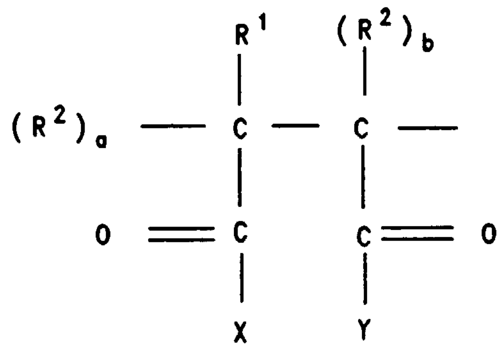

(B)

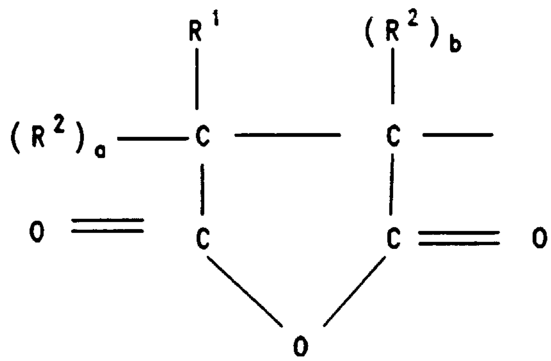

(C)

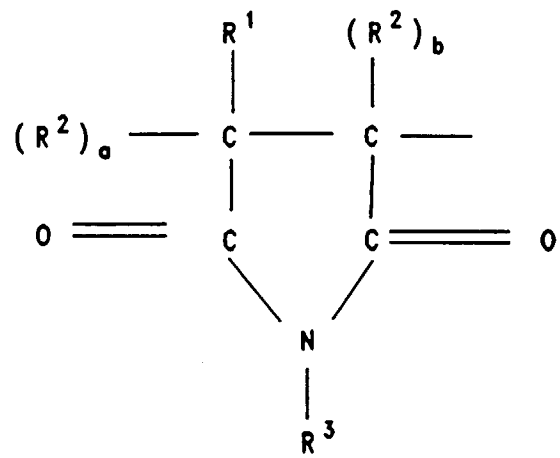

wobei

$R^1$ und $R^2$ unabhängig voneinander Wasserstoff oder Methyl,
a, b gleich Null oder Eins und a + b gleich Eins,
X und Y gleich oder verschieden sind und
für die Gruppe

$-N-HR^3,$

wobei $R^3$ $C_6$-$C_{40}$-Alkyl, $C_5$-$C_{20}$-Cycloalkyl oder $C_6$-$C_{18}$-Aryl, die Gruppe

$-N-(R^3)_2,$

wobei $R^3$ gleich oder verschieden ist und die obengenannte Bedeutung hat, und/oder die Gruppe

$-O-R^4,$

wobei $R^4$ Wasserstoff, ein Kation der Formel $H_3N^{\oplus}R^3$ oder $H_2N^{\oplus}(R^3)_2$, $C_6$-$C_{40}$-Alkyl, $C_5$-$C_{20}$-Cycloalkyl oder $C_6$-$C_{18}$-Aryl, bevorzugt Phenyl, stehen,
19 - 80 Mol.-%, bevorzugt 39 - 60 Mol.-% an bivalenten Struktureinheiten D

(D)

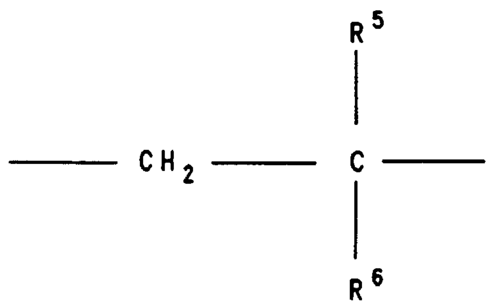

worin

$R^5$ Wasserstoff oder $C_1$-$C_4$-Alkyl und
$R^6$ $C_6$-$C_{60}$-Alkyl oder $C_6$-$C_{18}$-Aryl bedeuten

und
1 - 30 Mol.-%, bevorzugt 1-20 Mol.-% an bivalenten Struktureinheiten E

(E)

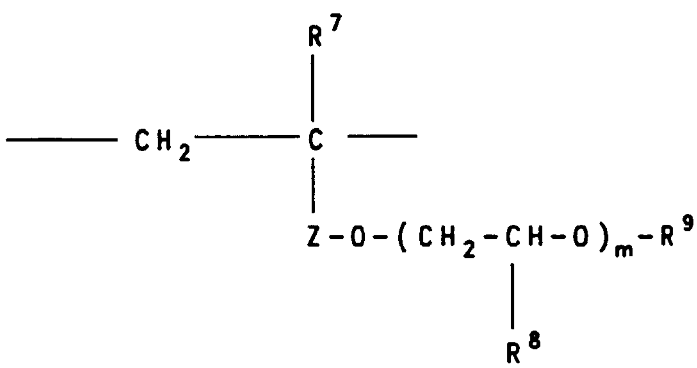

worin

- $R^7$ Wasserstoff oder Methyl,
- $R^8$ Wasserstoff oder $C_1$-$C_4$-Alkyl,
- Z $C_1$-$C_4$-Alkylen,
- m eine Zahl von 1 bis 100,
- $R^9$ $C_1$-$C_{24}$-Alkyl, $C_5$-$C_{20}$-Cycloalkyl, $C_6$-$C_{18}$-Aryl oder -C(O)-$R^{10}$, wobei
- $R^{10}$ $C_1$-$C_{40}$ Alkyl, $C_5$-$C_{10}$-Cycloalkyl oder $C_6$-$C_{18}$-Aryl,

enthalten und **vor der Umsetzung mit Aminen und/oder Alkoholen** K-Werte von 8 bis 100 besitzen.

**2.** Terpolymer nach Anspruch 1, enthaltend bivalente Struktureinheiten der Formel A, worin

- X eine Gruppe der Formel O-$R^4$ mit
- $R^4$ $C_6$-$C_{40}$-Alkyl und
- Y eine Gruppe der Formel O-$R^4$, wobei
- $R^4$ ein Kation der Formel $H_2N^{\oplus}$ $(R^3)_2$ mit
- $R^3$ $C_6$-$C_{40}$-Alkyl.

**3.** Terpolymer nach Anspruch 1, enthaltend bivalente Struktureinheiten der Formel A, worin

- X eine Gruppe der Formel -N$(R^3)_2$ mit $R^3$ $C_6$-$C_{40}$-Alkyl und
- Y eine Gruppe der Formel O-$R^4$, wobei $R^4$ ein Kation der Formel $H_2N^{\oplus}(R^3)_2$ mit $R^3$ $C_6$-$C_{40}$-Alkyl.

**4.** Terpolymere nach Anspruch 2 oder 3, dadurch gekennzeichnet, daß $R^3$ und $R^4$ $C_6$-$C_{24}$-Alkyl.

**5.** Verfahren zur Herstellung der Terpolymeren nach Anspruch 1, dadurch gekennzeichnet, daß man Monomere der allgemeinen Formel F und/oder G

(F)

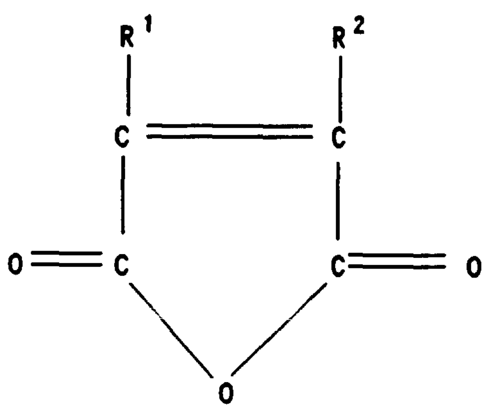

(G)

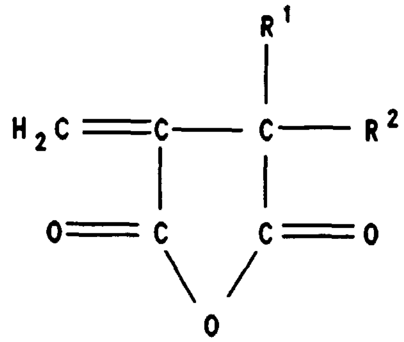

wobei $R^1$ und $R^2$ unabhängig voneinander Wasserstoff oder Methyl, Monomere der allgemeinen Formel H

(H)

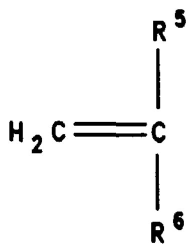

worin $R^5$ Wasserstoff oder $C_1$-$C_4$-Alkyl und $R^6$ $C_6$-$C_{60}$-Alkyl oder $C_6$-$C_{18}$-Aryl
und Monomere der allgemeinen Formel J

(J)

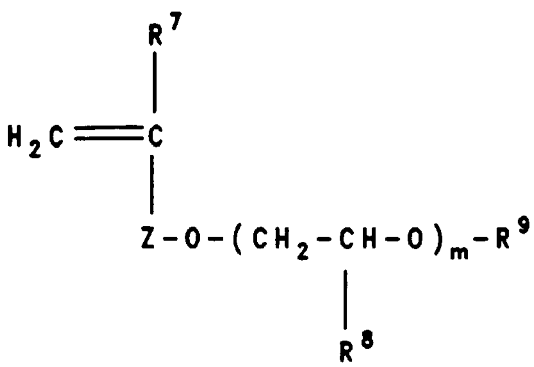

worin

- $R^7$ Wasserstoff oder Methyl,
- $R^8$ Wasserstoff oder $C_1$-$C_4$-Alkyl,
- Z $C_1$-$C_4$-Alkylen,
- m eine Zahl von 1 bis 100,
- $R^9$ $C_1$-$C_{24}$-Alkyl, $C_5$-$C_{20}$-Cycloalkyl, $C_6$-$C_{18}$-Aryl oder -C(O)-$R^{10}$, wobei
- $R^{10}$ $C_1$-$C_{40}$ Alkyl, $C_5$-$C_{10}$-Cycloalkyl oder $C_6$-$C_{18}$-Aryl,

miteinander polymerisiert und
anschließend mit primären und/oder sekundären Aminen der Formeln

(N) $NH_2$-$R^3$

(P) $NH$-$(R^3)_2$,

wobei $R^3$ $C_6$-$C_{40}$-Alkyl, $C_5$-$C_{20}$-Cycloalkyl oder $C_6$-$C_{18}$-Aryl
und/oder Alkoholen der Formel

(Q) HO-$R^4$

wobei $R^4$ $C_6$-$C_{40}$-Alkyl, $C_5$-$C_{20}$-Cycloalkyl oder $C_6$-$C_{18}$-Aryl, bevorzugt Phenyl, umsetzt.

**6.** Verfahren nach Anspruch 5, dadurch gekennzeichnet, daß man die Polymerisation in Lösung, Suspension oder Schmelze, bevorzugt in Lösung durchführt.

**7.** Verfahren nach Anspruch 5, dadurch gekennzeichnet, daß man die Polymerisation in einem Rührkessel, einer Rührkesselkaskade, einem Rührreaktor oder einem statischen Mischer durchführt.

**8.** Verfahren nach Anspruch 5, dadurch gekennzeichnet, daß das Molverhältnis der Monomeren der Formeln F und/oder G, H und J 1 : 0,5 - 2 : 0,01 - 0,5, bevorzugt 1: 0,9 - 1,1 : 0,04 - 0,2 beträgt.

**9.** Verfahren nach Anspruch 5, dadurch gekennzeichnet, daß die Polymerisation in Gegenwart von 0,1 bis 20 Gew.-%, bevorzugt 0,2 bis 10 Gew.-%, bezogen auf den Monomerengehalt, eines Radikalkettenstarters erfolgt.

**10.** Verfahren nach Anspruch 5, dadurch gekennzeichnet, daß die Polymerisation in Gegenwart von 0,1 bis 10 Gew.-%, bezogen auf den Monomerengehalt, eines Reglers erfolgt.

**11.** Verfahren nach Anspruch 5, dadurch gekennzeichnet, daß die Polymerisation bei einer Temperatur von 40 bis 400°C, bevorzugt 80 bis 250°C und gegebenenfalls unter Luftausschluß durchgeführt wird.

**12.** Verfahren nach Anspruch 5, dadurch gekennzeichnet, daß die Polymerisation in einem Lösungsmittel durchgeführt wird, in dem die Monomeren der Formeln F,G,H und J und die Terpolymere nach Anspruch 1 löslich sind.

**13.** Verfahren nach Anspruch 5, dadurch gekennzeichnet, daß man bei der Umsetzung mit Aminen der Formeln N, P und/oder Alkoholen der Formel Q zunächst die Umsetzung des Polymeren mit dem Alkohol durchgeführt wird und anschließend die Umsetzung mit den primären und/oder sekundären Aminen erfolgt.

**14.** Verwendung von Terpolymeren nach Anspruch 1 als Paraffininhibitor für paraffinhaltige Rohöle und Erdölprodukte.

**15.** Verwendung der Terpolymeren nach Anspruch 14, dadurch gekennzeichnet, daß man 10 bis 10 000 ppm des Terpolymeren dem paraffinhaltigen Rohöl oder Erdölprodukt zusetzt.

**16.** Paraffinhaltige Erdöle und Erdölprodukte enthaltend ein Terpolymer nach Anspruch 1.

**17.** Mischung bestehend aus mindestens einem Terpolymer nach Anspruch 1 und mindestens einem Ethylen-Vinylester-Copolymeren.

**18.** Mischung nach Anspruch 17, dadurch gekennzeichnet, daß sie Ethylen-Vinylester-Copolymere enthalten, die sich von Copolymeren ableiten, die $C_1$-$C_{20}$-Alkylvinylester, Vinylester von gesättigten $C_{10}$-$C_{24}$-Fettsäuren, Ester ungesättigter Carbonsäuren, Diisobutylen, Dimethylvinylcarbinol und Methoxyessigsäurevinylester als Monomere enthalten.

**19.** Mischung nach Anspruch 17, dadurch gekennzeichnet, daß die Ethylen-Vinylester-Copolymeren

80 - 51 Gew.-% Ethylen,
20 - 49 Gew.-% Vinylacetat oder Vinylpropionat, enthalten.

**20.** Mischung nach Anspruch 17, dadurch gekennzeichnet, daß die Ethylen-Vinylester-Copolymeren

79 - 40 Gew.-% Ethylen,
20 - 35 Gew.-%, bevorzugt 1 - 15 Gew.-%, Vinylacetat oder Vinylpropionat und
1 - 25 Gew.-%, bevorzugt 1 - 15 Gew.-%, Diisobutylen, Neononansäurevinylester oder Neodecansäurevinylester enthalten.

**21.** Verwendung von Mischungen nach Anspruch 17 als Paraffindispergatoren in Erdölmitteldestillaten.

**22.** Verwendung von Mischungen nach Anspruch 17 zur Absenkung des Trübungspunktes (cloud point) in Erdölmitteldestillaten.

**23.** Verwendung nach Anspruch 21 oder 22, dadurch gekennzeichnet, daß man eine Mischung bestehend aus

50 bis 1000 ppm, bevorzugt 50 bis 500 ppm an Terpolymer und
50 bis 1000 ppm, bevorzugt 50 bis 500 ppm an Ethylen-Vinylester-Copolymeren dem paraffinhaltigen Erdölmitteldestillat zusetzt.

**24.** Paraffinhaltige Erdölmitteldestillate enthaltend Mischungen nach Anspruch 17.

**25.** Mischung bestehend aus einer Mischung nach Anspruch 17 und mindestens einem quartärem Ammoniumsalz der Formel

$$^{\oplus}N(R^{11})_4X^{\ominus}$$

worin $R^{11}$ $C_1$-$C_{30}$-Alkyl, bevorzugt $C_1$-$C_{22}$-Alkyl, $C_2$-$C_{30}$-Alkenyl, bevorzugt $C_2$-$C_{22}$-Alkenyl, Benzyl oder ein Rest der Formel $-(CH_2-CH_2-O)_n-R^{12}$, wobei $R^{12}$ Wasserstoff oder ein Fettsäurerest der Formel $C(O)-R^{13}$, wobei $R^{13}$ $C_6$-$C_{40}$-Alkyl oder $C_6$-$C_{40}$-Alkenyl, n eine Zahl von 1 bis 30 und X für ein Halogen, bevorzugt Chlor oder Methosulfat steht.

**26.** Verwendung von Mischungen nach Anspruch 25 als Paraffindispergatoren in Erdölmitteldestillaten.

**27.** Verwendung nach Anspruch 26, dadurch gekennzeichnet, daß man eine Mischung bestehend aus

50 bis 1000 ppm, bevorzugt 50 bis 500 ppm an Terpolymer nach Anspruch 1,
50 bis 1000 ppm, bevorzugt 50 bis 500 ppm an Ethylen-Vinylester-Copolymeren und
50 bis 1000 ppm, bevorzugt 50 bis 500 ppm an quartärem Ammoniumsalz der Formel $^{\oplus}N(R^{11})_4X^{\ominus}$ dem paraffinhaltigen Erdölmitteldestillat zusetzt.

**28.** Paraffinhaltige Erdölmitteldestillate enthaltend Mischungen nach Anspruch 25.

## Claims

**1.** A terpolymer based on α,β-unsaturated dicarboxylic anhydrides, α,β-unsaturated compounds and polyoxyalkylene ethers of lower unsaturated alcohols, which comprises
20-80 mol %, preferably 40-60 mol %, of bivalent structural units A, B and/or C

(A)

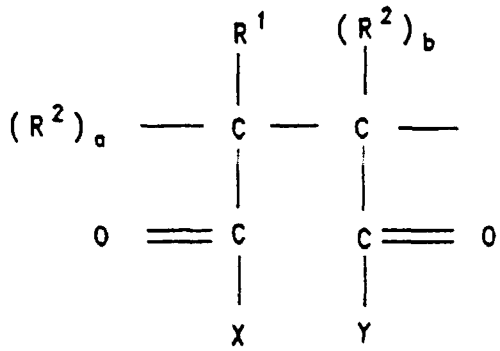

(B)

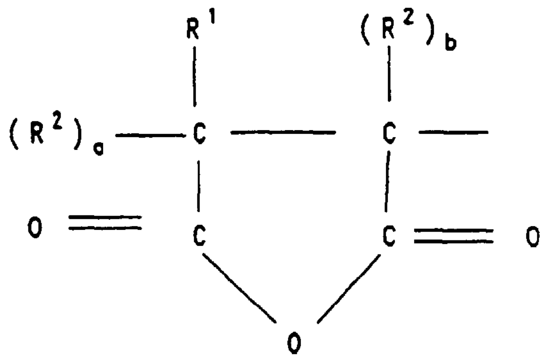

(C)

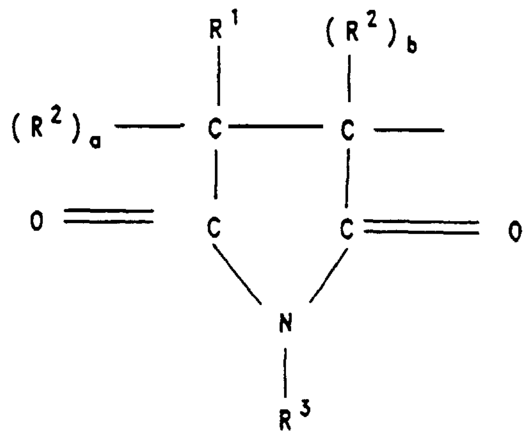

where

$R^1$ and $R^2$ are, independently of one another, hydrogen or methyl,
a and b are zero or one and a + b is one,
X and Y are identical or different and are the -N-$HR^3$ group,
where $R^3$ is $C_6$-$C_{40}$-alkyl, $C_5$-$C_{20}$-cycloalkyl or $C_6$-$C_{18}$-aryl,
the -N-$(R^3)_2$ group,
where $R^3$ is identical or different and is as defined above, and/or
the -O-$R^4$ group,
where $R^4$ is hydrogen, a cation of the formula $H_3N^{\oplus}R^3$ or $H_2N^{\oplus}(R^3)_2$, $C_6$-$C_{40}$-alkyl, $C_5$-$C_{20}$-cycloalkyl or $C_6$-$C_{18}$-aryl, preferably phenyl,
19-80 mol %, preferably 39-60 mol %, of bivalent structural units D

(D)

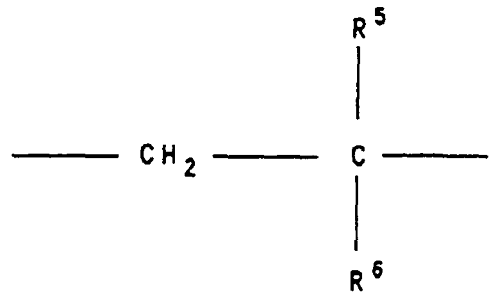

in which

$R^5$ is hydrogen or $C_1$-$C_4$-alkyl and
$R_6$ is $C_6$-$C_{60}$-alkyl or $C_6$-$C_{18}$-aryl,
and
1-30 mol %, preferably 1-20 mol %, of bivalent structural units E

(E)

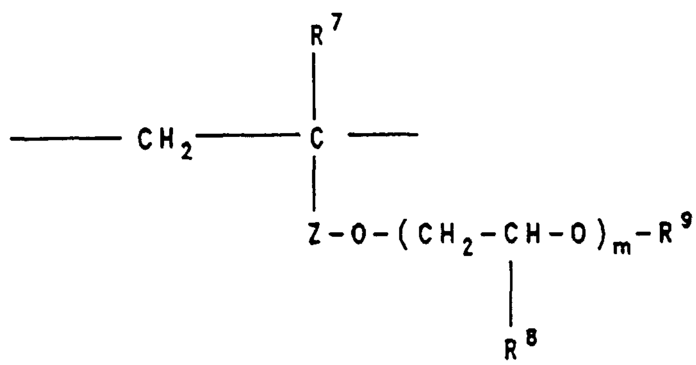

in which

$R^7$ is hydrogen or methyl,
$R^8$ is hydrogen or $C_1$-$C_4$-alkyl,
Z is $C_1$-$C_4$-alkylene,
m is a number from 1 to 100,
$R^9$ is $C_1$-$C_{24}$-alkyl, $C_5$-$C_{20}$-cycloalkyl, $C_6$-$C_{18}$-aryl or -C(O)-$R^{10}$, where
$R^{10}$ is $C_1$-$C_{40}$-alkyl, $C_5$-$C_{10}$-cycloalkyl or $C_6$-$C_{18}$-aryl, and has K values of from 8 to 100 before the reaction with amines and/or alcohols.

**2.** A terpolymer as claimed in claim 1, containing bivalent structural units of the formula A, in which X is a group of the formula O-$R^4$ with

$R^4$ being $C_6$-$C_{40}$-alkyl and
Y is a group of the formula O-$R^4$, where
$R^4$ is a cation of the formula $H_2N^{\oplus}(R^3)_2$ with
$R^3$ being $C_6$-$C_{40}$-alkyl.

**3.** A terpolymer as claimed in claim 1, containing bivalent structural units of the formula A, in which X is a group of the formula -N$(R^3)_2$ with $R^3$ being $C_6$-$C_{40}$-alkyl and

Y is a group of the formula O-$R^4$, where $R^4$ is a cation of the formula $H_2N^{\oplus}(R^3)_2$ with $R^3$ being $C_6$-$C_{40}$-alkyl.

**4.** A terpolymer as claimed in claim 2 or 3, wherein $R^3$ and $R^4$ are $C_6$-$C_{24}$-alkyl.

**5.** A process for preparing the terpolymers as claimed in claim 1, which comprises polymerizing with one another monomers of the formula F and/or G

(F)

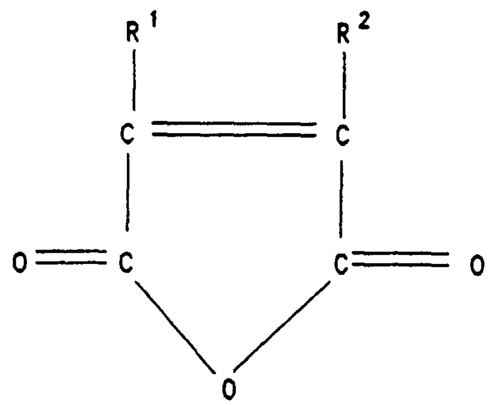

(G)

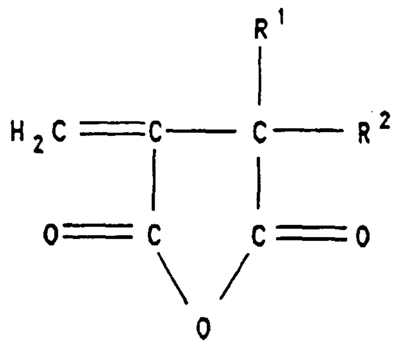

where $R^1$ and $R^2$ are, independently of one another, hydrogen or methyl, monomers of the formula H

(H)

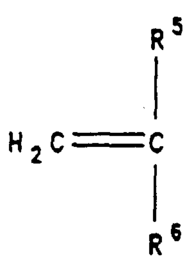

in which $R^5$ is hydrogen or $C_1$-$C_4$-alkyl and $R^6$ is $C_6$-$C_{60}$-alkyl or $C_6$-$C_{18}$-aryl, and monomers of the formula J

(J)

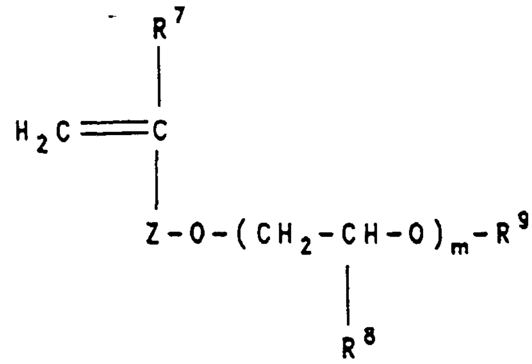

in which

$R^7$ is hydrogen or methyl,
$R^8$ is hydrogen or $C_1$-$C_4$-alkyl,
Z is $C_1$-$C_4$-alkylene,
m is a number from 1 to 100,
$R^9$ is $C_1$-$C_{24}$-alkyl, $C_5$-$C_{20}$-cycloalkyl, $C_6$-$C_{18}$-aryl or -C(O)-$R^{10}$, where
$R^{10}$ is $C_1$-$C_{40}$-alkyl, $C_5$-$C_{10}$-cycloalkyl or $C_6$-$C_{18}$-aryl, and subsequently reacting the product with primary and/or secondary amines of the formulae

(N) $NH_2$-$R^3$,

(P) $NH(R^3)_2$,

where $R^3$ is $C_6$-$C_{40}$-alkyl, $C_5$-$C_{20}$-cycloalkyl or $C_6$-$C_{18}$-aryl,
and/or alcohols of the formula

(Q) HO-$R^4$,

where $R^4$ is $C_6$-$C_{40}$-alkyl, $C_5$-$C_{20}$-cycloalkyl or $C_6$-$C_{18}$-aryl, preferably phenyl.

**6.** The process as claimed in claim 5, wherein the polymerization is carried out in solution, suspension or melt, preferably in solution.

**7.** The process as claimed in claim 5, wherein the polymerization is carried out in a stirred vessel, a cascade of stirred vessels, a stirred reactor or a static mixer.

**8.** The process as claimed in claim 5, wherein the molar ratio between the monomers of the formulae F and/or G, H and J is 1 : 0.5 - 2 : 0.01 - 0.5, preferably 1 : 0.9 - 1.1 : 0.04 - 0.2.

**9.** The process as claimed in claim 5, wherein the polymerization is carried out in the presence of from 0.1 to 20 % by weight, preferably from 0.2 to 10 % by weight, based on the monomer content, of a free-radical chain initiator.

**10.** The process as claimed in claim 5, wherein the polymerization is carried out in the presence of from 0.1 to 10 % by weight, based on the monomer content, of a regulator.

**11.** The process as claimed in claim 5, wherein the polymerization is carried out at a temperature from 40 to 400°C, preferably from 80 to 250°C and with or without the exclusion of air.

**12.** The process as claimed in claim 5, wherein the polymerization is carried out in a solvent in which the monomers

of the formulae F, G, H and J and the terpolymers as claimed in claim 1 are soluble.

**13.** The process as claimed in claim 5, wherein the reaction with amines of the formulae N and P and/or alcohols of the formula Q is carried out by first reacting the polymer with the alcohol and subsequently reacting the product with the primary and/or secondary amines.

**14.** Use of a terpolymer as claimed in claim 1 as a paraffin inhibitor for paraffin-containing crude oils and petroleum products.

**15.** Use of a terpolymer as claimed in claim 14, wherein from 10 to 10,000 ppm of the terpolymer are added to the paraffin-containing crude oil or petroleum product.

**16.** A paraffin-containing petroleum or petroleum product which contains a terpolymer as claimed in claim 1.

**17.** A mixture comprising at least one terpolymer as claimed in claim 1 and at least one ethylene-vinyl ester copolymer.

**18.** A mixture as claimed in claim 17, which contains ethylene-vinyl ester copolymers derived from copolymers which contain $C_1$-$C_{20}$-alkylvinyl esters, vinyl esters of saturated $C_{10}$-$C_{24}$-fatty acids, esters of unsaturated carboxylic acids, diisobutylene, dimethylvinylcarbinol and vinyl methoxyacetate as monomers.

**19.** A mixture as claimed in claim 17, wherein the ethylene-vinyl ester copolymers comprise

80 - 51 % by weight of ethylene and
20 - 49 % by weight of vinyl acetate or vinyl propionate.

**20.** A mixture as claimed in claim 17, wherein the ethylene-vinyl ester copolymers comprise

79 - 40 % by weight of ethylene,
20 - 35 % by weight, preferably 1 - 15 % by weight, of vinyl acetate or vinyl propionate and
1 - 25 % by weight, preferably 1 - 15 % by weight, of diisobutylene, vinyl neononanoate or vinyl neodecanoate.

**21.** Use of a mixture as claimed in claim 17 as a paraffin dispersant in petroleum middle distillates.

**22.** Use of a mixture as claimed in claim 17 for lowering the cloud point in petroleum middle distillates.

**23.** Use as claimed in claim 21 or 22, wherein a mixture comprising

from 50 to 1000 ppm, preferably from 50 to 500 ppm, of terpolymer and
from 50 to 1000 ppm, preferably from 50 to 500 ppm, of ethylene-vinyl ester copolymers is added to the paraffin-containing petroleum middle distillate.

**24.** A paraffin-containing petroleum middle distillate which contains a mixture as claimed in claim 17.

**25.** A mixture comprising a mixture as claimed in claim 17 and at least one quaternary ammonium salt of the formula

$$^{\oplus}N(R^{11})_4X^{\ominus}$$

in which $R^{11}$ is $C_1$-$C_{30}$-alkyl, preferably $C_1$-$C_{22}$-alkyl, $C_2$-$C_{30}$-alkenyl, preferably $C_2$-$C_{22}$-alkenyl, benzyl or a radical of the formula $-(CH_2-CH_2-O)_n-R^{12}$, where $R^{12}$ is hydrogen or a fatty acid radical of the formula $C(O)-R^{13}$, where $R^{13}$ is $C_6$-$C_{40}$-alkyl or $C_6$-$C_{40}$-alkenyl, n is a number from 1 to 30 and X is a halogen, preferably chlorine, or methosulfate.

**26.** Use of a mixture as claimed in claim 25 as a paraffin dispersant in petroleum middle distillates.

**27.** Use as claimed in claim 26, wherein a mixture comprising

from 50 to 1000 ppm, preferably from 50 to 500 ppm, of terpolymer as claimed in claim 1,

from 50 to 1000 ppm, preferably from 50 to 500 ppm, of ethylene-vinyl ester copolymers and from 50 to 1000 ppm, preferably from 50 to 500 ppm, of quaternary ammonium salt of the formula $^{\oplus}N(R^{11})_4X^{\ominus}$ is added to the paraffin-containing petroleum middle distillate.

**28.** A paraffin-containing petroleum middle distillate which contains a mixture as claimed in claim 25.

**Revendications**

**1.** Terpolymères à base d'anhydrides d'acides dicarboxyliques α,β-insaturés, de composés α,β-insaturés et de polyoxyalkylène-éthers d'alcools insaturés, inférieurs, caractérisés en ce qu'ils contiennent 20 à 80, de préférence 40 à 60 moles % d'unités structurelles bivalentes A, B et/ou C

(A)

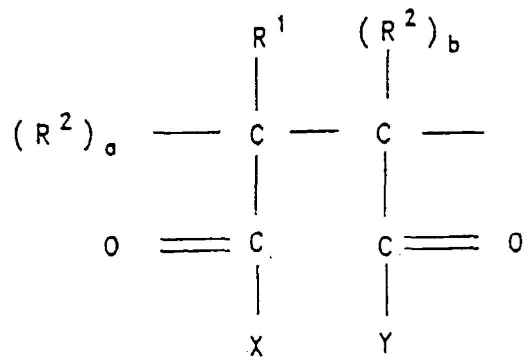

(B)

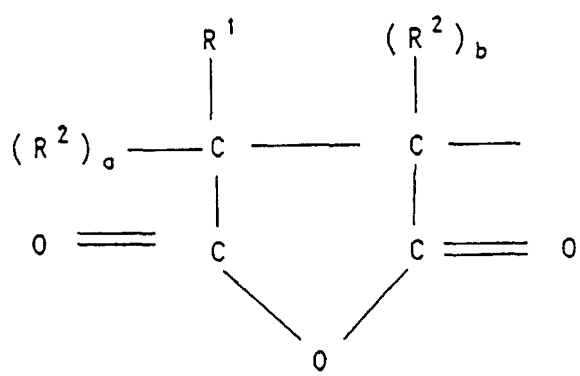

(C)

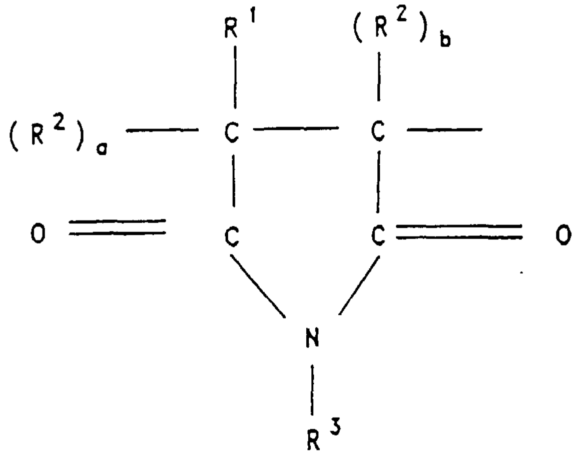

dans lesquelles

$R^1$ et $R^2$, indépendamment l'un de l'autre, représentent hydrogène ou méthyle,
a, b sont 0 ou 1, et a + b font 1,
X et Y sont identiques ou différents et représentent le groupe $-N-HR^3$,
dans lequel $R^3$ est alkyle en $C_6$-$C_{40}$, cycloalkyle en $C_5$-$C_{20}$ ou aryle en $C_6$-$C_{18}$,
le groupe $-N-(R^3)_2$,
où les $R^3$ sont identiques ou différents et ont la signification indiquée ci-dessus, et/ou
le groupe $-O-R^4$,
dans lequel $R^4$ représente l'hydrogène, un cation de formule $H_2N^{\oplus}(R^3)_2$ ou $H_3N^{\oplus} R^3$, alkyle en $C_6$-$C_{40}$, cycloalkyle en $C_5$-$C_{20}$ ou aryle en $C_6$-$C_{18}$, de préférence phényle,
19 à 80 moles %, de préférence 39 à 60 moles % d'unités structurelles bivalentes D

(D)

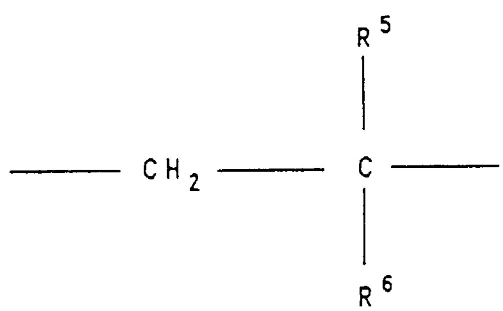

dans lesquelles

$R^5$ représente hydrogène ou alkyle en $C_1$-$C_4$ et
$R^6$ représente alkyle en $C_6$-$C_{60}$ ou aryle en $C_6$-$C_{18}$ et
1 à 30 moles %, de préférence 1 à 20 moles % d'unités structurelles bivalentes E

(E)

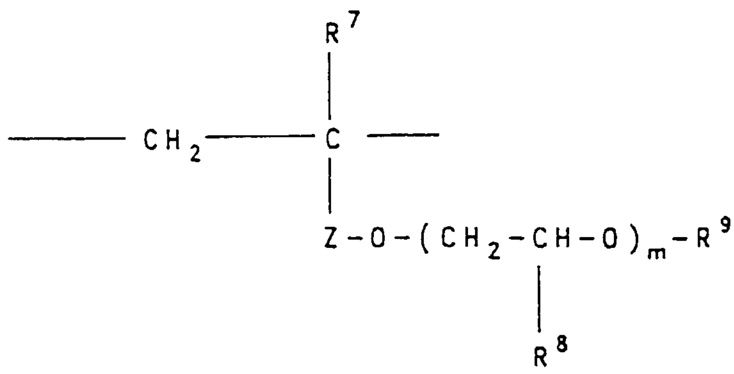

dans lesquelles

$R^7$ représente hydrogène ou méthyle,
$R^8$ représente hydrogène ou alkyle en $C_1$-$C_4$,
Z représente alkylène en $C_1$-$C_4$,
m représente un nombre de 1 à 100,
$R^9$ représente alkyle en $C_1$-$C_{24}$, cycloalkyle en $C_5$-$C_{20}$, aryle en $C_6$-$C_{18}$ ou -C(O)-$R^{10}$, où
$R^{10}$ est alkyle en $C_1$-$C_{40}$, cycloalkyle en $C_5$-$C_{10}$ ou aryle en $C_6$-$C_{18}$,
**et, avant la réaction avec des amines et/ou des alcools**, possèdent des valeurs K de 8 à 100.

**2.** Terpolymère selon la revendication 1, contenant des unités structurelles bivalentes de formule A, dans laquelle

X représente un groupe de formule O-$R^4$ avec
$R^4$ représentant alkyle en $C_6$-$C_{40}$, et
Y représentant un groupe de formule O-$R^4$ dans laquelle
$R^4$ représente un cation de formule $H_2N^{\oplus}(R^3)_2$ avec
$R^3$ représentant alkyle en $C_6$-$C_{40}$.

**3.** Terpolymère selon la revendication 1, contenant des unités structurelles bivalentes de formule A, dans laquelle

X représente un groupe de formule -$N(R^3)_2$ avec $R^3$ représentant alkyle en $C_6$-$C_{40}$, et
Y représente un groupe de formule O-$R^4$, dans laquelle $R^4$ est un cation de formule $H_2N^{\oplus}(R^3)_2$ avec $R^3$ représentant alkyle en $C_6$-$C_{40}$.

**4.** Terpolymères selon la revendication 2 ou 3, caractérisé en ce que $R^3$ et $R^4$ représentent alkyle en $C_6$-$C_{24}$.

**5.** Procédé de préparation des terpolymères selon la revendication 1, caractérisé en ce que l'on polymérise ensemble des monomères de formule générale F et/ou G

(F)

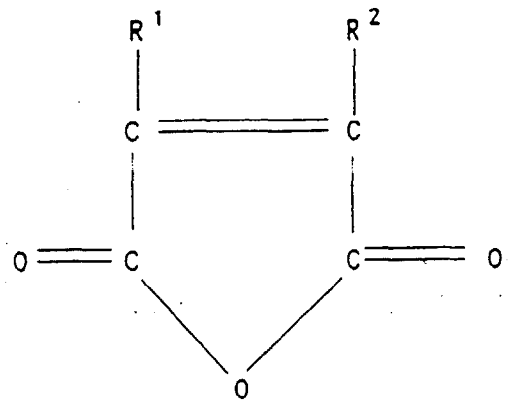

(G)

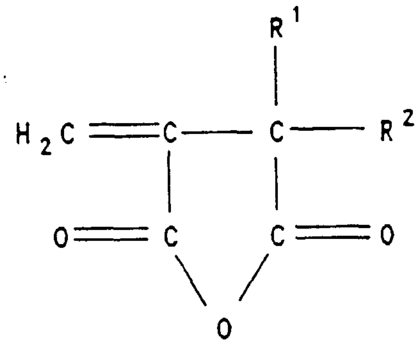

dans lesquelles $R^1$ et $R^2$ représentent, indépendamment l'un de l'autre, hydrogène ou méthyle, des monomères de formule générale H

(H)

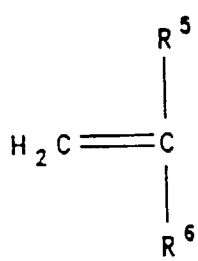

dans laquelle $R^5$ représente hydrogène ou alkyle en $C_1$-$C_4$ et $R^6$ représente alkyle en $C_6$-$C_{60}$ ou aryle en $C_6$-$C_{18}$, et des monomères de formule générale J

(J)

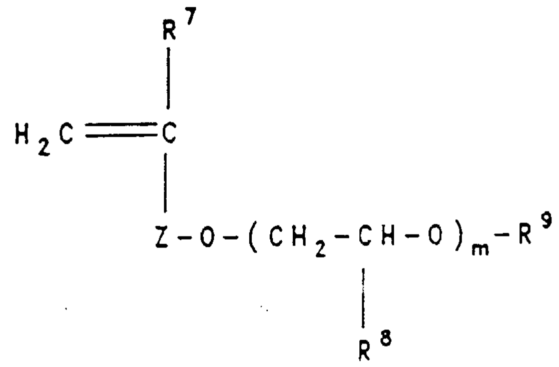

dans laquelle

$R^7$ représente hydrogène ou méthyle,
$R^8$ représente hydrogène ou alkyle en $C_1$-$C_4$,
Z représente alkylène en $C_1$-$C_4$,
m représente un nombre de 1 à 100,
$R^9$ représente alkyle en $C_1$-$C_{24}$, cycloalkyle en $C_5$-$C_{20}$, aryle en $C_6$-$C_{18}$ ou -C(O)-$R^{10}$, où $R^{10}$ représente alkyle en $C_1$-$C_{40}$, cycloalkyle en $C_5$-$C_{10}$ ou aryle en $C_6$-$C_{18}$ et
on fait réagir ensuite avec des amines primaires et/ou secondaires de formules

(N) $NH_2$-$R^3$,

(P) NH-$(R^3)_2$,

où $R^3$ représente alkyle en $C_6$-$C_{40}$, cycloalkyle en $C_5$-$C_{20}$ ou aryle en $C_6$-$C_{18}$,
et/ou des alcools de formule

(Q) HO-$R^4$,

où $R^4$ représente alkyle en $C_6$-$C_{40}$, cycloalkyle en $C_5$-$C_{20}$ ou aryle en $C_6$-$C_{18}$, de préférence phényle.

**6.** Procédé selon la revendication 5, caractérisé en ce que l'on effectue la polymérisation en solution, en suspension ou en fusion, de préférence en solution.

**7.** Procédé selon la revendication 5, caractérisé en ce que la polymérisation est effectuée dans une cuve à agitation, une cascade de cuves à agitation, un réacteur à agitation ou dans un mélangeur statique.

**8.** Procédé selon la revendication 5, caractérisé en ce que la proportion molaire des monomères de formules F et/ou G, H et J est de 1:0,5 à 2:0,01 à 0,5, de préférence de 1:0,9 à 1,1:0,04 à 0,2.

**9.** Procédé selon la revendication 5, caractérisé en ce que la polymérisation a lieu en présence de 0,1 à 20 % en poids, de préférence 0,2 à 10 % en poids par rapport à la teneur en monomères, d'un amorceur de chaînes radicalaires.

**10.** Procédé selon la revendication 5, caractérisé en ce que la polymérisation a lieu en présence de 0,1 à 10 % en poids, par rapport à la teneur en monomères, d'un régulateur.

**11.** Procédé selon la revendication 5, caractérisé en ce que la polymérisation est effectuée à une température de 40 à 400 °C, de préférence de 80 à 250 °C et éventuellement en l'absence d'air.

12. Procédé selon la revendication 5, caractérisé en ce que la polymérisation est effectuée dans un solvant dans lequel les monomères de formules F, G, H et J et les terpolymères selon la revendication 1 sont solubles.

13. Procédé selon la revendication 5, caractérisé en ce que dans la réaction avec les amines de formules N, P et/ou les alcools de formule Q, on effectue d'abord la réaction du polymère avec l'alcool et ensuite la réaction avec les amines primaires et/ou secondaires.

14. Utilisation des terpolymères selon la revendication 1 en tant qu'inhibiteurs de paraffines pour des huiles brutes contenant des paraffines et des produits pétroliers.

15. Utilisation des terpolymères selon la revendication 14, caractérisée en ce que l'on ajoute 10 à 10 000 ppm du terpolymère à l'huile brute ou aux produits pétroliers contenant des paraffines.

16. Pétroles et produits pétroliers contenant des paraffines, contenant un terpolymère selon la revendication 1.

17. Mélange constitué d'au moins un terpolymère selon la revendication 1 et d'au moins un copolymère éthylène-esters vinyliques.

18. Mélange(s) selon la revendication 17, caractérisé(s) en ce qu'il(s) contien(nen)t des copolymères éthylène-esters vinyliques qui dérivent de copolymères qui contiennent des esters vinyliques d'alkyle en $C_1$-$C_{20}$, des esters vinyliques d'acides gras en $C_{10}$-$C_{24}$ saturés, des esters d'acides carboxyliques insaturés, du diisobutylène, du diméthylvinylcarbinol et du méthoxyacétate de vinyle en tant que monomères.

19. Mélange selon la revendication 17, caractérisé en ce que les copolymères éthylène-esters vinyliques contiennent

80 à 51 % en poids d'éthylène,
20 à 49 % en poids d'acétate de vinyle ou de propionate de vinyle.

20. Mélange selon la revendication 17, caractérisé en ce que les copolymères éthylène-esters vinyliques contiennent

79 à 40 % en poids d'éthylène,
20 à 35 % en poids, de préférence 1 à 15 % en poids d'acétate de vinyle ou de propionate de vinyle, et
1 à 25 % en poids, de préférence 1 à 15 % en poids de diisobutylène, d'ester vinylique de l'acide néononanoïque ou d'ester vinylique de l'acide néodécanoïque.

21. Utilisation de mélanges selon la revendication 17 comme dispersants de paraffines dans des distillats moyens de pétrole.

22. Utilisation de mélanges selon la revendication 17 pour diminuer le point de trouble (cloud point) dans des distillats moyens de pétrole.

23. Utilisation selon la revendication 21 ou 22, caractérisée en ce que l'on ajoute un mélange constitué de

50 à 1 000 ppm, de préférence de 50 à 500 ppm de terpolymère et
50 à 1 000 ppm, de préférence 50 à 500 ppm de copolymères éthylène-esters vinyliques au distillat moyen de pétrole contenant des paraffines.

24. Distillats moyens de pétrole contenant des paraffines, contenant des mélanges selon la revendication 17.

25. Mélange constitué d'un mélange selon la revendication 17 et d'au moins un sel d'ammonium quaternaire de formule

$$^{\oplus}N(R^{11})_4X^{\ominus}$$

dans laquelle $R^{11}$ représente alkyle en $C_1$-$C_{30}$, de préférence alkyle en $C_1$-$C_{22}$, alcényle en $C_2$-$C_{30}$, de préférence alcényle en $C_2$-$C_{22}$, benzyle ou un radical de formule $-(CH_2-CH_2-O)_n-R^{12}$, dans laquelle $R^{12}$ représente l'hydrogène ou un radical d'acide gras de formule $C(O)-R^{13}$, dans laquelle $R^{13}$ représente alkyle en $C_6$-$C_{40}$ ou alcényle en $C_6$-$C_{40}$, n représente un nombre de 1 à 30 et X représente un halogène, de préférence le chlore ou méthosulfate.

**26.** Utilisation de mélanges selon la revendication 25, en tant que dispersants de paraffines dans des distillats moyens de pétrole.

**27.** Utilisation selon la revendication 26, caractérisée en ce que l'on ajoute un mélange constitué de

50 à 1 000 ppm, de préférence de 50 à 500 ppm de terpolymère selon la revendication 1,
50 à 1 000 ppm, de préférence 50 à 500 ppm de copolymères éthylène-esters vinyliques et
50 à 1 000 ppm, de préférence 50 à 500 ppm de sel d'ammonium quaternaire de formule $^{\oplus}N(R^{11})_4X^{\ominus}$ au distillat moyen de pétrole contenant des paraffines.

**28.** Distillats moyens de pétrole contenant des paraffines, contenant des mélanges selon la revendication 25.